# EUROPÄISCHE PATENTANMELDUNG

(11) **EP 4 851 669 A1**
(43) Veröffentlichungstag der Anmeldung: **09.12.2026**
(21) Anmeldenummer: 26181324.0
(22) Anmeldetag: 27.05.2026
(51) Int. Cl.: G01S 13/90, G06N 3/02, H04N 19/00

(54) **VERFAHREN ZUR RECHNERGESTÜTZTEN ERZEUGUNG EINES DATENGERIEBENEN MODELLS FÜR DIE RECHNERGESTÜTZTE VERARBEITUNG VON DIGITALEN SAR-ROHDATEN**

(30) Priorität: 06.06.2025 DE 102025122386
(71) Anmelder: Deutsches Zentrum für Luft- und Raumfahrt e.V., 53227 Bonn (DE)
(72) Erfinder: Rizzoli, Paola, 80686 München (DE); Martone, Michele, 80686 München (DE); Gollin, Nicola, 82205 Gilching (DE)
(74) Vertreter: Fink Numrich Patentanwälte PartmbB

(57) **Zusammenfassung**

Die Erfindung betrifft ein Verfahren zur rechnergestützten Erzeugung eines datengetriebenen Modells für die Verarbeitung von SAR-Rohdaten, welche die rückgestreuten Radarechos von Radarpulsen (RP) umfassen, wobei die Radarpulse (RP) von einem oder mehreren Sendern zumindest eines Objekts (SA) ausgesendet wurden und die Radarechos von einem oder mehreren Empfängern des zumindest einen Objekts (SA) empfangen wurden, wobei die SAR-Rohdaten für jeden Empfänger einen Rohdatensatz (RD) aus einer Vielzahl von Datenabtastungen (SP) enthalten, wobei im Rahmen der Verarbeitung der SAR-Rohdaten Datenblocks (DB) von Datenabtastungen (SP) des Rohdatensatzes (RD) mit einer dem jeweiligen Datenblock (DB) zugeordneten Bitrate (BR) unter Verwendung einer Bitraten-Information (ŷ₁, ..., ŷₘ) quantisiert werden, wobei die Bitraten-Information (ŷ₁, ..., ŷₘ) für jeden Datenblock (DB) die zugeordnete Bitrate (BR) angibt und das datengetriebene Modell zur Ermittlung der Bitraten-Information (ŷ₁, ..., ŷₘ) vorgesehen ist, wobei das Verfahren die folgenden Schritte umfasst:
- Generierung von Trainingsdaten (TD) unter Verwendung einer Vorschrift (RU_{T1}, ..., RU_{Tn});
- Trainieren eines neuronalen Netzes (NN) mit den Trainingsdaten (TD) basierend auf einem Optimierungsziel, das ein erstes Teilziel und ein zweites Teilziel umfasst, wobei gemäß dem ersten Teilziel die Abweichung zwischen der von dem neuronalen Netz (NN) ausgegebenen Bitraten-Information (ŷ₁, ..., ŷₘ) von den Trainingsdaten (TD) möglichst gering ist und gemäß dem zweiten Teilziel (ŷ₁, ..., ŷₘ) die Abweichung der jeweiligen Bitraten (BR) der von dem neuronalen Netz (NN) ausgegebenen Bitraten-Information (ŷ₁, ..., ŷₘ) von einem vorgegebenen Bitratenwert (Rₗ, ..., Rₘ) möglichst gering ist.

## Beschreibung

Die Erfindung betrifft ein Verfahren zur rechnergestützten Erzeugung eines datengetriebenen Modells für die rechnergestützte Verarbeitung von digitalen SAR-Rohdaten sowie ein Verfahren und eine Vorrichtung zur rechnergestützten Verarbeitung von digitalen SAR-Rohdaten und ein Computerprogrammprodukt sowie ein Computerprogramm.

SAR-Systeme (SAR = Synthetic Aperture Radar) ermöglichen die Erzeugung von Bildern der Erdoberfläche über das Echo von Radarpulsen, die von einem bewegten Objekt und insbesondere einem Flugobjekt, wie z.B. einem Satelliten, ausgesendet werden. Im Rahmen der SAR-Datenverarbeitung nutzt man die Tatsache, dass durch die Bewegung des Objekts entsprechende Punkte auf der Erdoberfläche mit unterschiedlichen Abständen zum Objekt erfasst werden, was zu einer Frequenzverschiebung im Radarecho führt. Über eine geeignete Prozessierung kann hieraus ein digitales Bild der Erdoberfläche errechnet werden.

Da durch die Erfassung des Radarechos für eine Vielzahl von unterschiedlichen Positionen in Bewegungsrichtung des Objekts (auch als Azimut-Positionen bezeichnet) eine große Menge an Rohdaten anfällt, ist es aus dem Stand der Technik bekannt, die SAR-Rohdaten nach deren Digitalisierung zu quantisieren. Hierdurch wird der Speicherplatz für die Rohdaten bei deren Zwischenspeicherung auf dem bewegten Objekt vermindert und es wird eine geringere Datenrate (Bits pro Abtastung) bei der Übermittlung der Rohdaten an eine Bodenstation auf der Erdoberfläche benötigt. Dies ist wichtig, denn die Menge der auf dem bewegten Objekt befindlichen Daten sollte so gering wie möglich gehalten werden, da es bei typischen Weltraum-SAR-Missionen aufgrund der begrenzten Speicherkapazität an Bord und der begrenzten Kapazität zum Herunterladen von Daten ansonsten zu Engpässen kommt.

Aus dem Stand der Technik ist als Quantisierungstechnologie für SAR-Rohdaten die sog. BAQ-Quantisierung (BAQ = Block Adaptive Quantization) bekannt. Allgemein zeichnet sich eine BAQ-Quantisierung dadurch aus, dass die digitalen Datenabtastungen der SAR-Rohdaten in Datenblocks aufgeteilt werden und in jedem Datenblock die entsprechenden Quantisierungsstufen basierend auf einer oder mehreren Größen bestimmt werden, die in Abhängigkeit von den Werten der digitalen Datenabtastungen des jeweiligen Datenblocks ermittelt werden. Die zur Bestimmung der Quantisierungsstufen herangezogenen Größen können z.B. die Gesamtleistung bzw. die mittlere Leistung der Datenabtastungen innerhalb eines Datenblocks umfassen, um basierend darauf die Quantisierungsstufen in einen Bereich zu legen, in dem die meisten Werte der Datenabtastungen liegen.

In den Druckschriften [1] und [2] sind herkömmliche BAQ-Quantisierungsverfahren beschrieben, bei denen für die Quantisierung aller Datenblocks die gleiche Bitrate (d.h. Anzahl von Bits pro quantisierter Datenabtastung) verwendet werden.

Aus der Druckschrift [3] ist eine dynamische FDBA-Quantisierung (FDBA = Flexible Dynamic Block Adaptive Quantization) für SAR-Rohdaten bekannt. Dabei wird die Bitrate der Quantisierung der jeweiligen Datenblocks dynamisch in Abhängigkeit vom Signal-zu-Rausch-Verhältnis der Datenabtastungen innerhalb eines Datenblocks festgelegt.

Aus der Druckschrift [4] ist eine adaptive BAQ-Quantisierung für SAR-Rohdaten bekannt, bei der die Bitrate der Quantisierung der jeweiligen Datenblocks (d.h. der BAQ-Blocks mit typischerweise ca. 100 Abtastungen) im Hinblick auf Parameter optimiert ist, die aus SAR-Bildern der Rohdaten bzw. aus weitergehend prozessierten SAR-Produkten (z.B. SAR-Interferogrammen) gewonnen sind. In diesem Verfahren wird eine A-Priori-Information über die lokale Verteilung von Rückstreusignalen für den gerade erfassten Abschnitt auf der Erdoberfläche benötigt.

Die BAQ-Quantisierungen mit adaptiver Bitrate gemäß den Dokumenten [3] und [4] weisen den Nachteil auf, dass größere Mengen an Daten für die Vorschrift zur Festlegung der Bitraten (z.B. in der Form von Look-up-Tabellen) bzw. für eine entsprechende A-Priori-Information anfallen. Dies ist insbesondere bei der Durchführung der Quantisierung auf dem sich bewegenden Objekt, das die SAR-Rohdaten erfasst, problematisch, denn es müssen größere Datenmengen an das Objekt übertragen bzw. dort gespeichert werden. Ferner führt die Verwendung von Look-up-Tabellen und einer A-Priori-Information zu einer erhöhten Berechnungskomplexität für die Quantisierung.

Die Druckschrift [5] offenbart ein Verfahren zur rechnergestützten Erzeugung eines datengetriebenen Modells in der Form eines neuronalen Netzes, das die zur Quantisierung verwendeten Bitraten der Datenblocks eines SAR-Rohdatensatzes ausgibt. Zum Lernen des neuronalen Netzes werden Trainingsdaten verwendet, die auf einer Vorschrift beruhen, die von Werten zumindest eines Parameters abhängt, die aus jeweiligen vorbekannten Rohdatensätzen der Trainingsdaten gewonnen werden. Die Werte des zumindest einen Parameters sind beispielsweise Qualitätswerte für ein aus der SAR-Prozessierung gewonnenes SAR-Produkt. Das neuronale Netz berücksichtigt keine Kriterien im Hinblick auf Anforderungen an die Bitraten der quantisierten SAR-Rohdatensätze.

Aufgabe der Erfindung ist es, eine auf einem datengetriebenen Modell basierende BAQ-Quantisierung mit adaptiven Bitraten der Datenblocks im Vergleich zum Stand der Technik zu erweitern.

Diese Aufgabe wird durch das Verfahren zur rechnergestützten Erzeugung eines datengetriebenen Modells gemäß Patentanspruch 1 bzw. das Verfahren zur rechnergestützten Verarbeitung von digitalen SAR-Rohdaten gemäß Patentanspruch 11 bzw. die Vorrichtung zur rechnergestützten Verarbeitung von digitalen SAR-Rohdaten gemäß Patentanspruch 15 bzw. das Computerprogrammprodukt gemäß Patentanspruch 16 bzw. das Computerprogramm gemäß Patentanspruch 17 gelöst. Weiterbildungen der Erfindung sind in den abhängigen Ansprüchen definiert.

Die Erfindung gemäß dem Verfahren des Patentanspruchs 1 zeichnet sich dadurch aus, dass ein datengetriebenes Modell in der Form eines neuronalen Netzes erzeugt wird, mit dem anschließend dynamisch entsprechende Bitraten zur Quantisierung von Datenblocks in digitalen SAR-Rohdaten festgelegt werden können. Mit anderen Worten ist das datengetriebene Modell zur Verarbeitung von digitalen SAR-Rohdaten vorgesehen. Solche SAR-Rohdaten umfassen in an sich bekannter Weise die rückgestreuten Radarechos von Radarpulsen, wobei die Rückstreuung in der Regel an der Erdoberfläche erfolgt. Die Radarpulse wurden dabei von einem oder mehreren Sendern zumindest eines Objekts ausgesendet, das sich in eine erste Richtung bewegt. Diese erste Richtung wird auch als Azimut-Richtung bezeichnet. Vorzugsweise handelt es sich bei dem zumindest einen Objekt um zumindest ein Flugobjekt, insbesondere um einen oder mehrere Satelliten.

Die Radarechos, die in den SAR-Rohdaten enthalten sind, wurden von einem oder mehreren Empfängern des zumindest einen Objekts empfangen. Die SAR-Rohdaten enthalten für jeden Empfänger einen Rohdatensatz aus einer Vielzahl von zeitlich aufeinander folgenden Datenabtastungen, denen jeweils eine Position in der ersten Richtung (Azimut-Richtung) und eine Position in einer zweiten Richtung zugeordnet sind, wobei die zweite Richtung auch als Range-Richtung bezeichnet wird. Diese Range-Richtung erstreckt sich senkrecht zur Azimut-Richtung. Im Rahmen der Verarbeitung der SAR-Rohdaten werden Datenblocks (auch als BAQ-Rohdatenblocks bezeichnet) von zeitlich aufeinander folgenden Datenabtastungen des Rohdatensatzes separat mit einer dem jeweiligen Datenblock zugeordneten Bitrate, welche die Anzahl von Bits pro quantisierter Datenabtastung im jeweiligen Datenblock festlegt, unter Verwendung einer Bitraten-Information quantisiert. Die Bitraten-Information gibt dabei für jeden Datenblock die zur Quantisierung des Datenblocks zu verwendende Bitrate an. Die Bitrate kann ein ganzzahliger Wert oder ggf. auch ein nicht-ganzzahliger Wert sein. Ein nicht-ganzzahliger Wert repräsentiert für einen jeweiligen Datenblock den arithmetischen Mittelwert der Bitraten der im jeweiligen Datenblock enthaltenen quantisierten Datenabtastungen. Das mit dem hier beschriebenen Verfahren erzeugte datengetriebene Modell ist zur Ermittlung der Bitraten-Information für den Rohdatensatz vorgesehen.

Die soeben beschriebene Quantisierung der Rohdaten ist nicht Teil des Verfahrens zur Erzeugung des datengetriebenen Modells. Vielmehr ist das datengetriebene Modell, das mit den nachfolgenden Schritten erzeugt wird, zur Verwendung bei der soeben beschriebenen Quantisierung vorgesehen. Die obige Beschreibung der Quantisierung ist jedoch für das Verständnis der nachfolgend erläuterten Schritte der Erzeugung des datengetriebenen Modells erforderlich.

Im Rahmen der Erzeugung des datengetriebenen Modells werden zuerst Trainingsdaten generiert, indem für eine Vielzahl von unterschiedlichen vorbekannten Rohdatensätzen, die im Aufbau den oben beschriebenen Rohdatensätzen entsprechen und in gleicher Weise in Datenblocks aufgeteilt sind, jeweils ein Trainings-Vektor mit einem oder mehreren Trainings-Einträgen erzeugt wird, wobei jeder Trainings-Eintrag eine Bitraten-Information enthält, welche Bitraten für Datenblocks eines jeweiligen vorbekannten Rohdatensatzes angibt. Die Bitraten-Information eines jeweiligen Trainings-Eintrags entspricht der oben definierten Bitraten-Information, d.h. sie gibt für jeden Datenblock des jeweiligen vorbekannten Rohdatensatzes eine zugeordnete Bitrate der Quantisierung an, wobei die Bitrate ganzzahlig oder ggf. auch nichtganzzahlig sein kann. Die Bitraten-Information wird basierend auf einer dem jeweiligen Trainings-Eintrag zugewiesenen Vorschrift aus einer Anzahl von unterschiedlichen Vorschriften generiert, wobei die zugewiesene Vorschrift mit zumindest einem Parameter verknüpft ist und von Werten des zumindest einen Parameters abhängt, die aus zumindest dem jeweiligen vorbekannten Rohdatensatz gewonnen werden. Vorzugsweise sind die Werte des zumindest einen Parameters Qualitätswerte für einen jeweiligen vorbekannten Rohdatensatz, insbesondere Qualitätswerte für die jeweiligen Datenblocks des jeweiligen vorbekannten Rohdatensatzes, oder Qualitätswerte für ein aus zumindest dem jeweiligen vorbekannten Rohdatensatz ermitteltes SAR-Produkt (z.B. SAR-Bild, SAR-Interferogramm und dergleichen), insbesondere Qualitätswerte für Bildpunkte oder Ausschnitte aus dem SAR-Produkt. In einer Variante der Erfindung kann ggf. nur ein Trainings-Eintrag im Trainings-Vektor enthalten sein, so dass in den Trainingsdaten auch nur eine Vorschrift berücksichtigt wird.

Als Vorschrift zur Erzeugung der Bitraten-Information eines jeweiligen Trainings-Eintrags können an sich bekannte Vorschriften genutzt werden. Insbesondere können die Vorschriften verwendet werden, die in den Druckschriften [3] und [4] beschrieben sind. Nichtsdestotrotz können auch geeignete andere Vorschriften zur Erzeugung der Bitraten-Information festgelegt werden. Die Werte des zumindest einen Parameters werden vorzugsweise für jeden Datenblock des entsprechenden vorbekannten Rohdatensatzes festgelegt und bestimmen hierdurch die Bitrate der Quantisierung des jeweiligen Datenblocks.

Die mittels der vorbekannten Rohdatensätze generierten Trainingsdaten in der Form entsprechender Trainings-Vektoren werden in einem nächsten Schritt zum Trainieren eines neuronalen Netzes verwendet, wobei das trainierte neuronale Netz das datengetriebene Modell darstellt, das erfindungsgemäß erzeugt wird. Neuronale Netze sind an sich bekannt und werden deshalb nicht im Detail beschrieben. Ein neuronales Netz enthält eine Vielzahl von Schichten aus Neuronen, die zur Bestimmung einer Ausgabe an einem Ausgang in Abhängigkeit von einer Eingabe an einem Eingang dienen. Zumindest eine Eingangsschicht aus Neuronen stellt den Eingang des neuronalen Netzes und zumindest eine Ausgangsschicht aus Neuronen stellt den Ausgang des neuronalen Netzes dar. Zwischen der zumindest einen Eingangsschicht und der zumindest einen Ausgangsschicht befinden sich eine oder mehrere versteckte Schichten aus Neuronen, welche die Eingabe am Eingang des neuronalen Netzes in eine entsprechende Ausgabe am Ausgang des neuronalen Netzes wandeln.

Erfindungsgemäß enthält das neuronale Netz einen Eingang zur Eingabe eines Rohdatensatzes und einen Ausgang zur Ausgabe eines Bitraten-Vektors für den eingegebenen Rohdatensatz, wobei der Bitraten-Vektor einen oder mehrere Bitraten-Einträge umfasst, wobei jeder Bitraten-Eintrag eine Bitraten-Information enthält, welche Bitraten für Datenblocks des eingegebenen Rohdatensatzes angibt. Jedem Bitraten-Eintrag ist ein Merkmalssatz aus einer Anzahl von Merkmalssätzen (d.h. aus einem oder mehreren Merkmalssätzen) zugeordnet, wobei zu jedem Merkmalssatz der Anzahl von Merkmalssätzen ein erstes Gewicht, ein zweites Gewicht, eine Vorschrift aus der Anzahl von Vorschriften und ein Bitratenkriterium in der Form eines vorgegebenen Bitratenwerts oder eines vorgegebenen Bitratenintervalls gehört.

Erfindungsgemäß erfolgt das Trainieren des neuronalen Netzes mittels der Trainingsdaten basierend auf einem überwachten Lernen mit einem Optimierungsziel, das für jeden Merkmalssatz ein erstes Teilziel und ein zweites Teilziel umfasst, wobei das erste Teilziel mit dem ersten Gewicht des jeweiligen Merkmalssatzes und das zweite Teilziel mit dem zweiten Gewicht des jeweiligen Merkmalssatzes gewichtet ist. Entsprechende Verfahren zum Trainieren eines neuronalen Netzes basierend auf überwachtem Lernen (z.B. mittels Error Backpropagation) sind dem Fachmann bekannt. Die entsprechenden Teilziele können z.B. als Bestandteile einer Kostenfunktion modelliert werden, welche im Rahmen des Lernens des neuronalen Netzes minimiert werden soll.

Erfindungsgemäß weicht gemäß dem ersten Teilziel für die jeweiligen vorbekannten Rohdatensätze, die in das neuronale Netz eingegeben werden, die durch das neuronale Netz ausgegebene Bitraten-Information des Bitraten-Eintrags, dem der jeweilige Merkmalssatz in dem ausgegebenen Bitraten-Vektor zugeordnet ist, möglichst wenig von der Bitraten-Information des Trainings-Eintrags ab, dem die Vorschrift des jeweiligen Merkmalssatzes in dem Trainings-Vektor für den jeweiligen vorbekannten Rohdatensatz zugewiesen ist.

Ferner weicht im erfindungsgemäßen Verfahren gemäß dem zweiten Teilziel für die jeweiligen vorbekannten Rohdatensätze, die in das neuronale Netz eingegeben werden, die jeweiligen Bitraten der durch das neuronale Netz ausgegebenen Bitraten-Information des Bitraten-Eintrags, dem der jeweilige Merkmalssatz in dem ausgegebenen Bitraten-Vektor zugeordnet ist, möglichst wenig von dem vorgegebenen Bitratenwert oder dem vorgegebenen Bitratenintervall des jeweiligen Merkmalssatzes ab.

Im erfindungsgemäßen Verfahren wird bei einer Quantisierung, welche mit dem erzeugten datengetriebenen Modell durchgeführt wird, neben einer guten Übereinstimmung der Ausgaben des neuronalen Netzes mit entsprechenden Trainingsdaten auch eine Anforderung an die Bitraten der quantisierten Datenblocks berücksichtigt. Auf diese Weise können bei der Quantisierung auch Einschränkungen im Hinblick auf die Datenrate des Übertragungswegs der quantisierten SAR-Rohdaten, z.B. hin zu einer Bodenstation, berücksichtigt werden.

In einer Variante der Erfindung wird beim Trainieren des neuronalen Netzes nur ein Merkmalssatz aus erstem Gewicht, zweitem Gewicht, einer Vorschrift und einem Bitratenkriterium berücksichtigt. In diesem Fall kann das neuronale Netz nur Bitraten für eine mögliche Quantisierung erzeugen. In einer anderen Variante werden beim Trainieren des neuronalen Netzes mehrere Merkmalssätze berücksichtigt, welche sich wechselweise in zumindest einer der Größen aus erstem Gewicht, zweitem Gewicht, einer Vorschrift und einem Bitratenkriterium unterscheiden. Dies hat den Vorteil, dass das neuronale Netz Bitraten für mehrere unterschiedliche Quantisierungen ausgibt und je nach Anforderungen die geeignete Quantisierung verwendet werden kann.

In einer bevorzugten Ausführungsform wird das Optimierungsziel, das im erfindungsgemäßen Verfahren für das Trainieren des neuronalen Netzes festgelegt ist, durch das Auffinden eines Extremums und vorzugsweise des Minimums einer Kostenfunktion repräsentiert. Die Kostenfunktion ist dabei ein Vektor aus einer Anzahl von Funktionseinträgen, der ggf. auch nur einen einzelnen Funktionseintrag enthalten kann. Jeder Funktionseintrag ist mit einem Merkmalssatz der Anzahl von Merkmalssätzen korreliert und stellt eine gewichtete Summe dar, die einen mit dem ersten Gewicht gewichteten ersten Term zur Repräsentation des ersten Teilziels und einen mit dem zweiten Gewicht gewichteten zweiten Term zur Repräsentation des zweiten Teilziels umfasst.

In jedem Funktionseintrag ist der erste Term ein Differenzmaß, das für einen jeweiligen vorbekannten Rohdatensatz ein Maß ist für die Differenz zwischen der Bitraten-Information des Trainings-Eintrags, dem die Vorschrift des mit dem jeweiligen Funktionseintrag korrelierten Merkmalssatzes zugewiesen ist und der in dem Trainings-Vektor für den jeweiligen vorbekannten Rohdatensatz enthalten ist, und der Bitraten-Information des Bitraten-Eintrags, dem der mit dem jeweiligen Funktionseintrag korrelierte Merkmalssatz zugeordnet ist und der in dem Bitraten-Vektor enthalten ist, den das neuronale Netz an dessen Ausgang für den jeweiligen vorbekannten Rohdatensatz an dessen Eingang ausgibt. Das Differenzmaß des ersten Terms kann beispielsweise der mittlere Fehler oder der mittlere quadratische Fehler zwischen den Bitraten der Bitraten-Information des Trainings-Eintrags und den Bitraten der durch das neuronale Netz ausgegebenen Bitraten-Information des Bitraten-Eintrags sein.

Demgegenüber ist der zweite Term in jedem Funktionseintrag ein Differenzmaß, das für einen jeweiligen vorbekannten Rohdatensatz ein Maß ist für die Differenz zwischen dem vorgegebenen Bitratenwert oder dem vorgegebenen Bitratenintervall und den jeweiligen Bitraten der Bitraten-Information des Bitraten-Eintrags, dem der mit dem jeweiligen Funktionseintrag korrelierte Merkmalssatz zugeordnet ist und der in dem Bitraten-Vektor enthalten ist, den das neuronale Netz an dessen Ausgang für den jeweiligen vorbekannten Rohdatensatz an dessen Eingang ausgibt. Das Differenzmaß des zweiten Terms kann beispielsweise der mittlere Fehler oder der mittlere quadratische Fehler zwischen dem vorgegebenen Bitratenwert oder dem vorgegebenen Bitratenintervall und den jeweiligen Bitraten der Bitraten-Information des entsprechenden Bitraten-Eintrags sein. Wird ein vorgegebenes Bitratenintervall verwendet, ist der Fehler gleich Null, wenn die jeweilige Bitrate im Bitratenintervall liegt. Ist dies nicht der Fall, repräsentiert der Fehler die Abweichung der jeweiligen Bitrate von der Bitrate der nächstgelegenen Intervallgrenze.

Die obige Kostenfunktion ist ein mehrdimensionaler Vektor, falls mehrere Merkmalssätze (und damit Funktionseinträge) berücksichtigt werden. Ferner variiert die Kostenfunktion in Abhängigkeit von dem verwendeten Rohdatensatz. Die Suche nach dem Extremum der Kostenfunktion kann iterativ über die vorbekannten Rohdatensätze durchgeführt werden, wobei in jedem Iterationsschritt die Gewichte des neuronalen Netzes so variiert werden, dass die Kostenfunktion für den jeweiligen vorbekannten Rohdatensatz ein Extremum annimmt.

In einer besonders bevorzugten Variante der obigen Ausführungsform wird das Optimierungsziel durch das Auffinden des Minimums der folgenden Kostenfunktion (L) repräsentiert: $L = \left[\begin{matrix}{α}_{1} \\ ⋮ \\ {α}_{m}\end{matrix}\right] ⋅ \left[\begin{matrix}{\left({y}_{1}-{\hat{y}}_{1}\right)}^{2} \\ ⋮ \\ {\left({y}_{m}-{\hat{y}}_{m}\right)}^{2}\end{matrix}\right] + \left[\begin{matrix}{β}_{1} \\ ⋮ \\ {β}_{m}\end{matrix}\right] ⋅ \left[\begin{matrix}{\left({R}_{1}-{\hat{y}}_{1}\right)}^{2} \\ ⋮ \\ {\left({R}_{m}-{\hat{y}}_{m}\right)}^{2}\end{matrix}\right]$ wobei $\left[\begin{matrix}{β}_{1} \\ ⋮ \\ {β}_{m}\end{matrix}\right] = \left(\left[\begin{matrix}1 \\ ⋮ \\ 1\end{matrix}\right]-\left[\begin{matrix}{α}_{1} \\ ⋮ \\ {α}_{m}\end{matrix}\right]\right)$
wobei L die Kostenfunktion ist;
wobei m die Anzahl von Funktionseinträgen ist;
wobei αᵣ (r = 1, ..., m) das erste Gewicht für den mit dem jeweiligen Funktionseintrag korrelierten Merkmalssatz ist;
wobei yᵣ (r = 1, ..., m) die Bitraten-Information des Trainings-Eintrags ist, dem die Vorschrift des mit dem jeweiligen Funktionseintrag korrelierten Merkmalssatzes zugewiesen ist und der in dem Trainings-Vektor für den jeweiligen vorbekannten Rohdatensatz enthalten ist;
wobei ŷᵣ (r = 1, ..., M) die Bitraten-Information des Bitraten-Eintrags ist, dem der mit dem jeweiligen Funktionseintrag korrelierte Merkmalssatz zugeordnet ist und der in dem Bitraten-Vektor enthalten ist, den das neuronale Netz an dessen Ausgang für den jeweiligen vorbekannten Rohdatensatz an dessen Eingang ausgibt;
wobei βᵣ (r = 1, ..., M) das zweite Gewicht für den mit dem jeweiligen Funktionseintrag korrelierten Merkmalssatz ist;
wobei Rᵣ (r = 1, ..., M) der vorgegebene Bitratenwert für den mit dem jeweiligen Funktionseintrag korrelierten Merkmalssatz ist, wobei der vorgegebene Bitratenwert identisch für alle Bitraten der Bitraten-Information des Bitraten-Eintrags ist, dem der mit dem jeweiligen Funktionseintrag korrelierte Merkmalssatz zugeordnet ist und der in dem Bitraten-Vektor enthalten ist, den das neuronale Netz an dessen Ausgang für den jeweiligen vorbekannten Rohdatensatz an dessen Eingang ausgibt.

In einer bevorzugten Variante des erfindungsgemäßen Verfahrens zur Erzeugung eines datengetriebenen Modells wird im Rahmen der Generierung der Trainingsdaten für zumindest eine Vorschrift der Anzahl von Vorschriften eine SAR-Prozessierung für einen jeweiligen vorbekannten Rohdatensatz durchgeführt, welche in an sich bekannter Weise die Ermittlung von einem oder mehreren SAR-Bildern aus zumindest dem jeweiligen vorbekannten Rohdatensatz (d.h. aus dem jeweiligen vorbekannten Rohdatensatz und ggf. einem oder mehreren weiteren Rohdatensätzen) enthält. Dabei werden aus Informationen, welche die SAR-Prozessierung liefert, die Werte des zumindest einen Parameters, der mit der zumindest einen Vorschrift verknüpft ist, gewonnen. Vorzugsweise sind die Werte des zumindest einen Parameters Qualitätswerte für ein aus der SAR-Prozessierung gewonnenes SAR-Produkt (z.B. SAR-Interferogramm, Höhenmodell, Klassifizierungskarte und dergleichen), insbesondere Qualitätswerte für Bildpunkte oder Ausschnitte aus dem SAR-Produkt.

Unter einem SAR-Bild ist dabei eine zweidimensionale Bildinformation zu verstehen, welche für eine Vielzahl von Bildpunkten in der erfassten Szene (vorzugsweise ein Ausschnitt auf der Erdoberfläche) eine Amplitude und eine Phase angibt. Fließt bei der SAR-Prozessierung nur ein jeweiliger vorbekannter Rohdatensatz ein, erhält man auch nur ein SAR-Bild für den entsprechenden Rohdatensatz. Das oder die ermittelten SAR-Bilder können das Ergebnis der SAR-Prozessierung und in diesem Sinne ein SAR-Produkt darstellen, sie können jedoch ggf. auch ein Zwischenschritt dieser SAR-Prozessierung sein. Beispielsweise können in an sich bekannter Weise im Rahmen der SAR-Prozessierung aus entsprechenden SAR-Bildern SAR-Interferogramme als SAR-Produkte gewonnen werden, wobei in diesem Fall neben dem jeweiligen vorbekannten Rohdatensatz auch noch zumindest ein anderer vorbekannter Rohdatensatz bei der SAR-Prozessierung des jeweiligen vorbekannten Rohdatensatzes einfließt.

Die Werte des zumindest einen Parameters, der mit der zumindest einen Vorschrift verknüpft ist, sind vorzugsweise mit entsprechenden Bildpunkten eines SAR-Bilds bzw. eines entsprechend weiterverarbeiteten Bilds (z.B. SAR-Intensitätsbild oder SAR-Interferogramm) verknüpft, wobei die Bildpunkte in an sich bekannter Weise jeweils mit einem entsprechenden Datenblock im jeweiligen vorbekannten Rohdatensatz verknüpft werden können, wobei die Datenabtastungen des verknüpften Datenblocks die Amplitude und Phase des zugehörigen Bildpunkts wesentlich mitbestimmen. Die Werte des zumindest einen Parameters an einem Bildpunkt legen somit die Bitrate der Quantisierung eines damit verknüpften Datenblocks in dem jeweiligen vorbekannten Rohdatensatz fest.

In einer Variante der soeben beschriebenen Ausführungsform des erfindungsgemäßen Verfahrens umfasst der zumindest eine Parameter, der mit der zumindest einen Vorschrift verknüpft ist, die Standardabweichung der Verteilung der rückgestreuten Signale in einem Ausschnitt um einen Bildpunkt eines SAR-Bilds, das für den jeweiligen vorbekannten Rohdatensatz ohne Quantisierung oder nach einer Quantisierung mit konstanter Bitrate (d.h. fester Bitrate für alle Datenblocks) ermittelt wird. Dabei werden Werte der Standardabweichung für eine Vielzahl von Bildpunkten und insbesondere für alle Bildpunkte im SAR-Bild ermittelt. Wie oben erwähnt, können die entsprechenden Bildpunkte mit Datenblocks in dem jeweiligen vorbekannten Rohdatensatz verknüpft werden, so dass in Abhängigkeit der Werte der Standardabweichung Bitraten für die verknüpften Datenblocks festgelegt werden können. Der soeben beschriebene Parameter der Standardabweichung der Verteilung der rückgestreuten Signale wird auch in der Druckschrift [4] zur Ermittlung der Bitraten-Information genutzt.

In einer weiteren bevorzugten Ausführungsform umfasst der zumindest eine Parameter, der mit der zumindest einen Vorschrift verknüpft ist, das Signal-zu-Quantisierungsrauschen-Verhältnis in einem Ausschnitt um einen Bildpunkt eines SAR-Bilds (d.h. das über den Ausschnitt gemittelte Signal-zu-Quantisierungsrauschen-Verhältnis), wobei das SAR-Bild das für den jeweiligen vorbekannten Rohdatensatz nach einer Quantisierung mit konstanter Bitrate (d.h. fester Bitrate für alle Datenblocks) ermittelt wird und wobei Werte des Signal-zu-Quantisierungsrauschen-Verhältnisses für eine Vielzahl von Bildpunkten in mehreren, für den jeweiligen vorbekannten Rohdatensatz ermittelten SAR-Bildern ermittelt werden, wobei sich die mehreren SAR-Bilder in der Bitrate der Quantisierung des jeweiligen vorbekannten Rohdatensatzes unterscheiden. Das Signal-zu-Quantisierungsrauschen-Verhältnis ist eine dem Fachmann hinlänglich bekannte Größe und wird beispielsweise in Druckschrift [4] definiert. Für die Werte des Signal-zu-Quantisierungsrauschen-Verhältnisses bei unterschiedlichen Quantisierungen kann dabei eine Anforderung, z.B. in der Form eines vorgegebenen Werts oder Wertebereichs, in der Vorschrift zur Erzeugung der Bitraten-Information definiert sein. Eine entsprechende Anforderung ist beispielsweise in der Druckschrift [4] näher definiert.

In einer weiteren bevorzugten Ausführungsform umfasst der zumindest eine Parameter, der mit der zumindest einen Vorschrift verknüpft ist, den durch Quantisierung verursachten Kohärenzverlust in einem Ausschnitt um einen Bildpunkt eines SAR-Interferogramms (d.h. den über den Ausschnitt gemittelten Kohärenzverlust), wobei das SAR-Interferogramm aus dem jeweiligen vorbekannten Rohdatensatz und zumindest einem weiteren vorbekannten Rohdatensatz nach einer Quantisierung mit konstanter Bitrate (d.h. fester Bitrate für alle Datenblocks) ermittelt wird und wobei Werte des durch Quantisierung verursachten Kohärenzverlustes für eine Vielzahl von Bildpunkten für mehrere SAR-Interferogramme ermittelt werden, wobei sich die mehreren SAR-Interferogramme in der Bitrate der Quantisierung des jeweiligen vorbekannten Rohdatensatzes und des zumindest einen weiteren vorbekannten Rohdatensatzes unterscheiden. Die Ermittlung entsprechender SAR-Interferogramme, die Phasenunterschiede zwischen mehreren SAR-Bildern beschreiben, ist dem Fachmann hinlänglich bekannt. Ferner ist auch der obige Kohärenzverlust eine hinlänglich bekannte Größe, welche beispielsweise in der Druckschrift [4] beschrieben ist. Für die Werte des Kohärenzverlustes bei unterschiedlichen Quantisierungen kann dabei eine Anforderung, z.B. in der Form eines vorgegebenen Werts oder Wertebereichs, in der Vorschrift zur Erzeugung der Bitraten-Information definiert sein. Eine entsprechende Anforderung ist beispielsweise in der Druckschrift [4] näher definiert.

In einer weiteren Ausführungsform umfasst der zumindest eine Parameter, der mit der zumindest einen Vorschrift verknüpft ist, die Standardabweichung der Verteilung des durch Quantisierung verursachten Phasenfehlers in einem Ausschnitt um einen Bildpunkt eines SAR-Interferogramms, das aus dem jeweiligen vorbekannten Rohdatensatz und zumindest einem weiteren vorbekannten Rohdatensatz nach einer Quantisierung mit konstanter Bitrate (d.h. fester Bitrate für alle Datenblocks) ermittelt wird, wobei Werte der Standardabweichung der Verteilung des durch die Quantisierung verursachten Phasenfehlers für eine Vielzahl von Bildpunkten für mehrere SAR-Interferogramme ermittelt werden, wobei sich die mehreren SAR-Interferogramme in der Bitrate der Quantisierung des jeweiligen vorbekannten Rohdatensatzes und des zumindest einen weiteren vorbekannten Rohdatensatzes unterscheiden.

Der durch Quantisierung verursachte Phasenfehler ist eine hinlänglich bekannte Größe und wird beispielsweise in der Druckschrift [4] näher definiert. Für die Werte der Standardabweichung der Verteilung des durch Quantisierung verursachten Phasenfehlers bei unterschiedlichen Quantisierungen kann dabei eine Anforderung, z.B. in der Form eines vorgegebenen Werts oder Wertebereichs, in der Vorschrift zur Erzeugung der Bitraten-Information definiert sein. Eine entsprechende Anforderung ist beispielsweise in der Druckschrift [4] näher definiert.

In einer weiteren Ausgestaltung des erfindungsgemäßen Verfahrens werden für zumindest eine Vorschrift der Anzahl von Vorschriften die Werte des zumindest einen Parameters, der mit der zumindest einen Vorschrift verknüpft ist, direkt aus den Datenabtastungen der Datenblocks des jeweiligen vorbekannten Rohdatensatzes gewonnen, ohne dass für die Gewinnung des zumindest einen Parameters eine SAR-Prozessierung durchgeführt wird, wobei eine solche SAR-Prozessierung die Ermittlung von SAR-Bildern aus zumindest dem jeweiligen vorbekannten Rohdatensatz enthält. Beispielsweise kann der zumindest eine Parameter das mittlere Signal-zu-Rausch-Verhältnis der Datenabtastungen in einem Datenblock in dem jeweiligen vorbekannten Rohdatensatz sein, wobei Werte des Signal-zu-Rausch-Verhältnisses für jeden Datenblock in dem jeweiligen vorbekannten Rohdatensatz ermittelt werden. Dieser Parameter wird auch in dem Verfahren der Druckschrift [3] verwendet.

Erfindungsgemäß kann ein beliebiges neuronales Netz zur Ermittlung der Bitraten-Information genutzt werden. Besonders praktikabel ist die Verwendung eines sog. Convolutional Neural Networks, das sehr gut für die Verarbeitung von Bildinformation geeignet ist. Der Aufbau von Convolutional Neural Networks ist dem Fachmann hinlänglich bekannt und wird deshalb nicht im Detail beschrieben. Ein Convolutional Neural Network enthält sog. Convolutional Layers, die am Eingang des neuronalen Netzes vorgesehen sind, wobei in der Regel auch sog. Polling Layers zur Datenreduktion vorgesehen sind. Die Convolutional Layers führen eine Faltung der zugeführten Daten mit einem Filterkernel durch. Mittels dieser Faltung können aus dem entsprechenden Rohdatensatzes bereits vorab Strukturen entsprechender SAR-Bilder extrahiert werden.

In einer weiteren bevorzugten Ausführungsform handelt es sich bei dem neuronalen Netz um ein tiefes neuronales Netz (englisch: deep neural network). Der Begriff des tiefen neuronalen Netzes ist dem Fachmann hinlänglich bekannt. Ein solches neuronales Netz zeichnet sich durch eine große Anzahl von versteckten Schichten aus und ermöglicht eine besonders gute Modellierung der Bitraten-Information. In einer besonders bevorzugten Ausführungsform ist das tiefe neuronale Netz ein Convolutional Neural Network.

In einer weiteren bevorzugten Ausführungsform ist das trainierte neuronale Netz auf einem oder mehreren FPGAs (FPGA = Field Programmable Gate Array) implementiert. FPGAs ermöglichen eine sehr effiziente Ausführung des neuronalen Netzes.

Neben dem oben beschriebenen Verfahren zur Erzeugung eines datengetriebenen Modells betrifft die Erfindung ein Verfahren zur rechnergestützten Verarbeitung von digitalen SAR-Rohdaten, welche die rückgestreuten Radarechos von Radarpulsen umfassen, wobei die Radarpulse von einem oder mehreren Sendern zumindest eines Objekts ausgesendet wurden, das sich in eine erste Richtung bewegt, und die Radarechos von einem oder mehreren Empfängern des zumindest einen Objekts empfangen wurden, wobei die SAR-Rohdaten für jeden Empfänger einen Rohdatensatz aus einer Vielzahl von zeitlich aufeinander folgenden Datenabtastungen enthalten, denen jeweils eine Position in der ersten Richtung und eine Position in eine zweite Richtung senkrecht zur ersten Richtung zugeordnet sind. Im Rahmen der Verarbeitung der SAR-Rohdaten werden Datenblocks von zeitlich aufeinander folgenden Datenabtastungen des Rohdatensatzes separat mit einer dem jeweiligen Datenblock zugeordneten Bitrate, welche die Anzahl von Bits pro quantisierter Datenabtastung im jeweiligen Datenblock festlegt, unter Verwendung einer Bitraten-Information quantisiert, wobei die Bitraten-Information für jeden Datenblock die zugeordnete Bitrate angibt.

Im Rahmen dieses Verfahrens entspricht die Bitraten-Information einem Bitraten-Eintrag, der mit einem datengetriebenen Modell generiert wird, das mit dem oben beschriebenen Verfahren zur rechnergestützten Erzeugung eines datengetriebenen Modells erzeugt wurde, d.h. die Erzeugung des datengetriebenen Modells ist nicht Teil des erfindungsgemäßen Verfahrens zur rechnergestützten Verarbeitung der SAR-Rohdaten (d.h. nicht Teil der Quantisierung). Im Falle, dass das datengetriebene Modell einen Bitraten-Vektor mit mehreren Bitraten-Einträgen ausgibt bzw. generiert, wird die Bitraten-Information eines der mehreren Bitraten-Einträge zur Quantisierung des entsprechenden Rohdatensatzes verwendet. Im Falle, dass die Bitraten-Information, die zur Quantisierung des Rohdatensatzes genutzt wird, für eine oder mehrere Datenblocks jeweils eine nicht-ganzzahlige Bitrate enthält, werden die Bitraten für die einzelnen quantisierten Datenabtastungen des entsprechenden Datenblocks derart festgelegt, dass der arithmetische Mittelwert dieser Bitraten der nichtganzzahligen Bitrate des entsprechenden Datenblocks entspricht. Eine derartige Festlegung nicht-ganzzahliger Bitraten ist beispielsweise aus der Druckschrift [6] bekannt.

In einer alternativen Variante ist es auch möglich, dass die Erzeugung des datengetriebenen Modells, mit dem die Bitraten-Information in dem Verfahren zur Verarbeitung von SAR-Rohdaten generiert wird, Teil des Verfahrens zur Verarbeitung von SAR-Rohdaten ist. Mit anderen Worten wird die Bitraten-Information mit einem datengetriebenen Modell generiert, das während der Verarbeitung der SAR-Rohdaten mit dem oben beschriebenen Verfahren erzeugt wird.

In einer bevorzugten Variante des erfindungsgemäßen Verfahrens zum Verarbeiten von SAR-Rohdaten werden die mit dem Verfahren gewonnenen quantisierten Datenabtastungen auf dem zumindest einen Objekt, d.h. direkt nachgeschaltet zur Erfassung der SAR-Rohdaten, ermittelt. Die quantisierten Datenabtastungen werden anschließend an eine Bodenstation, d.h. eine Station auf der Erdoberfläche, übertragen. Das zumindest eine Objekt ist in diesem Fall vorzugsweise zumindest ein Flugobjekt, insbesondere zumindest ein Satellit.

Die Erfindung betrifft ferner eine Vorrichtung zum Verarbeiten von digitalen SAR-Rohdaten, wobei die Vorrichtung zur Durchführung des erfindungsgemäßen Verfahrens zur Verarbeitung von SAR-Rohdaten bzw. einer oder mehrerer bevorzugter Varianten dieses Verfahrens konfiguriert ist. Hierzu enthält die Vorrichtung einen Quantisierer, der dazu eingerichtet ist, im Rahmen der rechnergestützten Verarbeitung der SAR-Rohdaten Datenblocks von zeitlich aufeinander folgenden Datenabtastungen des Rohdatensatzes separat mit einer dem jeweiligen Datenblock zugeordneten Bitrate, welche die Anzahl von Bits pro quantisierter Datenabtastung im jeweiligen Datenblock festlegt, unter Verwendung einer Bitraten-Information zu quantisieren, wobei die Bitraten-Information für jeden Datenblock die zugeordnete Bitrate angibt, wobei der Quantisierer zur Generierung der Bitraten-Information ein datengetriebenes Modell enthält, das mit dem oben beschriebenen Verfahren zur Erzeugung eines datengetriebenen Modells vorab erzeugt wurde. Alternativ kann das datengetriebene Modell auch durch den Quantisierer erzeugt werden, d.h. das Modell liegt nicht vorab als erzeugtes Modell im Quantisierer vor, sondern wird während der SAR-Datenverarbeitung generiert. Vorzugsweise ist die Vorrichtung auf dem zumindest einen Objekt vorgesehen, das den oder die Sender bzw. den oder die Empfänger für die Erfassung der SAR-Rohdaten umfasst.

Die Erfindung betrifft darüber hinaus ein Computerprogrammprodukt mit einem auf einem maschinenlesbaren Träger gespeicherten Programmcode zur Durchführung des erfindungsgemäßen Verfahrens zur rechnergestützten Erzeugung eines datengetriebenen Modells bzw. zur Durchführung des erfindungsgemäßen Verfahrens zur rechnergestützten Verarbeitung von digitalen SAR-Rohdaten bzw. zur Durchführung einer oder mehrerer bevorzugter Varianten dieser Verfahren, wenn der Programmcode auf einem Rechner ausgeführt wird.

Die Erfindung betrifft ferner ein Computerprogramm mit einem Programmcode zur Durchführung des erfindungsgemäßen Verfahrens zur rechnergestützten Erzeugung eines datengetriebenen Modells bzw. zur Durchführung des erfindungsgemäßen Verfahrens zur rechnergestützten Verarbeitung von digitalen SAR-Rohdaten bzw. zur Durchführung einer oder mehrerer bevorzugter Varianten dieser Verfahren, wenn der Programmcode auf einem Rechner ausgeführt wird.

Ausführungsbeispiele der Erfindung werden nachfolgend anhand der beigefügten Figuren detailliert beschrieben.

Es zeigen:
- Fig. 1: eine schematische Darstellung, anhand der das im Rahmen der Erfindung verwendete SAR-Prinzip erläutert wird;
- Fig. 2: eine schematische Darstellung zur Erläuterung einer Ausführungsform des erfindungsgemäßen Verfahrens zur rechnergestützten Verarbeitung von digitalen SAR-Rohdaten; und
- Fig. 3: eine schematische Darstellung einer Ausführungsform eines erfindungsgemäßen Verfahrens zur Erzeugung eines datengetriebenen Modells für das Verfahren der Fig. 2.

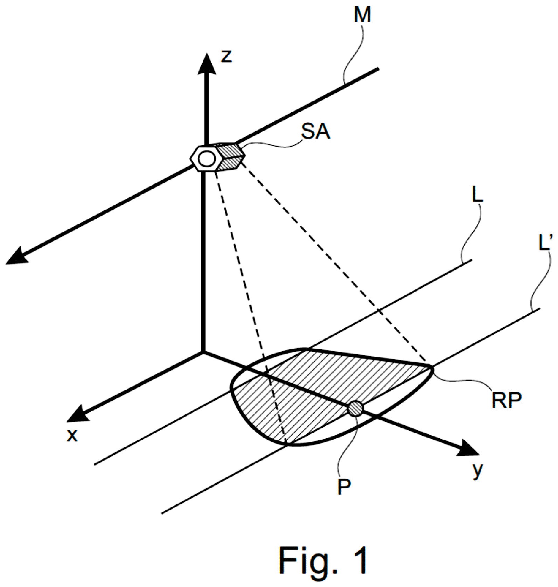

Zum besseren Verständnis wird zunächst anhand von Fig. 1 das Prinzip der SAR-Messung anhand der von einem Satelliten ausgesendeten Radarstrahlung erläutert. Anstatt von einem Satelliten kann die Radarstrahlung auch von einer beliebigen anderen sich bewegenden Plattform ausgesendet werden, wie z.B. einem Flugzeug oder einer Plattform, die sich auf der Erdoberfläche z.B. auf Schienen bewegt. Der in Fig. 1 dargestellte Satellit ist mit dem Bezugszeichen SA angedeutet und bewegt sich in Richtung des dargestellten Pfeils M, welcher der x-Richtung des in Fig. 1 wiedergegebenen kartesischen Koordinatensystems entspricht. Diese x-Richtung wird üblicherweise auch als Azimut bezeichnet. Der Satellit SA, dessen Höhe über der Erdoberfläche durch die z-Koordinate des Koordinatensystems repräsentiert wird, sendet während seiner Bewegung kontinuierlich mit einer vorbestimmten Pulswiederholfrequenz Radarpulse in Richtung zur Erdoberfläche aus, wobei die Kontur eines gerade ausgesendeten Radarpulses auf der Erdoberfläche mit RP bezeichnet ist. Von jedem ausgesendeten Radarpuls wird das Radarecho erfasst, indem die an der Erdoberfläche reflektierte Radarstrahlung in die Richtung y des kartesischen Koordinatensystems abgetastet wird. Die Richtung y wird üblicherweise auch als Bodenentfernung (Ground-Range) bezeichnet.

In dem dargestellten Ausführungsbeispiel werden bei der Auswertung nur Informationen der Radarstrahlung zwischen den beiden Linien L und L' erfasst, die einen Abstand von mehreren Kilometern (z.B. 30 km) aufweisen. Dies wird auch durch den schraffierten Bereich innerhalb des Radarpulses RP angedeutet. Als analoge Rohdaten der SAR-Messung erhält man für eine Vielzahl von Radarpulsen und somit für eine Vielzahl von Azimut-Positionen jeweils eine Vielzahl von analogen Datenabtastungen (auch als Datensamples bezeichnet), welche jeweils einer Range-Position entsprechen. Eine entsprechende Abtastung wird dabei durch ein komplexes Signal mit einer Amplitude und einer Phase repräsentiert.

Das Prinzip der SAR-Messung beruht nunmehr darauf, dass jeweilige Punkte auf der Erdoberfläche mehrfach aus unterschiedlichen Blickwinkeln aufgrund der Bewegung des Satelliten SA erfasst werden. Dies wird in Fig. 1 für den Punkt P verdeutlicht. Dieser Punkt P weist in dem dargestellten Szenario den geringstmöglichen Abstand zum Satelliten SA auf. Durch Bewegung des Satelliten in Richtung M wird dieser Abstand immer größer. Vor Erreichen der in Fig. 1 dargestellten Position wurde dieser Abstand immer kleiner. Aufgrund des Doppler-Effekts kommt es bei der Erfassung des Radarechos zu einer Frequenzverschiebung, die geeignet ausgewertet werden kann, wodurch schließlich für die Punkte der Erdoberfläche, an denen die Radarpulse reflektiert werden, eine Amplituden- und Phaseninformation und somit ein Bildpunkt der Erdoberfläche erhalten wird. Die entsprechende Berechnung von Bildpunkten der Erdoberfläche aus SAR-Rohdaten ist dem Fachmann hinlänglich bekannt und wird deshalb nicht weiter im Detail erläutert. Mit dem SAR-Messverfahren wird durch eine Vielzahl von Radarpulsen eines Radarsenders kleiner Apertur eine größere synthetische Apertur entsprechend der Ausdehnung des Radarpulses auf der Erdoberfläche simuliert.

In dem Szenario der Fig. 1 befinden sich sowohl der Sender der Radarstrahlung als auch der Empfänger des Radarechos innerhalb des Satelliten SA. Mit dieser Konstellation können mittels einer an sich bekannten SAR-Prozessierung zweidimensionale SAR-Bilder der Erdoberfläche ermittelt werden. In einer anderen Konstellation wird die SAR-Messung durch zwei, sich synchron bewegende Satelliten durchgeführt. Dabei werden die Radarpulse von einem Sender auf einem der Satelliten ausgesendet und das entsprechende Radarecho sowohl von einem Empfänger auf dem einen Satelliten als auch von einem Empfänger auf dem anderen Satelliten empfangen. Auf diese Weise wird die gleiche Szene aus unterschiedlichen Blickwinkeln aufgenommen. Die hierdurch erhaltenen zweidimensionalen SAR-Bilder werden dann rechnergestützt interferometrisch überlagert, um hierdurch ein dreidimensionales Bild der Erdoberfläche mit entsprechenden Höheninformationen zu errechnen. Alternativ kann der gleiche SAR-Satellit über das gleiche Gebiet auf der Erdoberfläche zweimal fliegen, um zwei SAR-Bilder zu erhalten, die interferometrisch prozessiert werden.

Im Rahmen einer SAR-Messung werden die in dem entsprechenden Satelliten empfangenen SAR-Rohdaten zunächst mit einem A/D-Wandler digitalisiert, um sie anschließend nach Durchführung der weiter unten beschriebenen Quantisierung an eine Bodenstation zur weiteren Verarbeitung zu übermitteln. Oftmals wird dabei ein A/D-Wandler verwendet, der aus den Rohdaten 8-Bit-Werte erzeugt. Es können aber auch andere Arten von Wandlern eingesetzt werden, welche digitale Werte mit längerer oder kürzerer Bitlänge generieren. Die mit dem A/D-Wandler digitalisierten SAR-Rohdaten stellen die digitalen SAR-Rohdaten im Sinne der Patentansprüche dar. Dabei entspricht ein Rohdatensatz im Sinne der Patentansprüche den durch einen jeweiligen Empfänger empfangenen (digitalisierten) Abtastungen der digitalen SAR-Rohdaten für eine vorgegebene Datenakquisition, d.h. einem vorgegebenen, durch den oder die Satelliten überflogenem Gebiet auf der Erdoberfläche.

Im Rahmen der weiteren Verarbeitung der digitalen SAR-Rohdaten in der Bodenstation werden dann die oben beschriebenen zweidimensionalen bzw. dreidimensionalen Bilder der Erdoberfläche errechnet. Da die Speicherressourcen im Satelliten und die Datenrate zur Übermittlung der Rohdaten an den Boden begrenzt sind, werden die digitalen SAR-Rohdaten jedoch noch vor deren Übermittlung an den Boden quantisiert. Im Rahmen der Quantisierung werden Quantisierungsstufen basierend auf kürzeren Bitwerten den digitalen Signalen zugeordnet. Beispielsweise kann bei der Quantisierung die ursprüngliche Bitrate von 8 Bits pro Datensample auf eine Rate von 2 oder 3 Bits herabgesetzt werden.

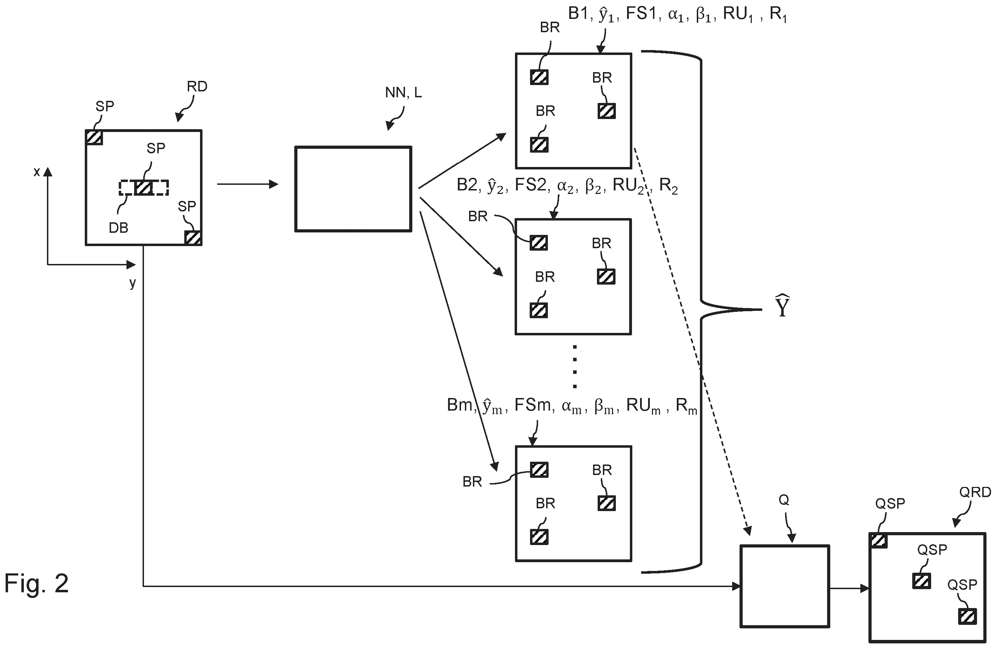

Erfindungsgemäß wird zur Quantisierung der digitalen SAR-Rohdaten ein datengetriebenes Modell verwendet, das mit geeigneten Trainingsdaten trainiert ist. Im Folgenden wird anhand von Fig. 2 eine Ausführungsform der Quantisierung mittels eines datengetriebenen Modells in der Form eines neuronalen Netzes beschrieben.

Fig. 2 zeigt schematisch einen zu quantisierenden Rohdatensatz RD in der Form einer zweidimensionalen Matrix. Diese Matrix enthält eine Vielzahl von digitalen Datenabtastungen, die lediglich beispielhaft durch schraffierte Quadrate SP angedeutet sind. Die gesamte Matrix ist dabei mit solchen Abtastungen besetzt. Die Abtastungen wurden für eine Vielzahl von Azimut-Positionen und eine Vielzahl von Range-Positionen ermittelt, wobei in Fig. 2 die Azimut-Richtung durch die x-Achse und die Range-Richtung durch die y-Achse eines zweidimensionalen kartesischen Koordinatensystems angedeutet ist.

Im Rahmen der Quantisierung wird der Rohdatensatz RD zunächst in eine Vielzahl von gleich großen Datenblocks (BAQ-Blocks) DB eingeteilt, wobei in Fig. 2 lediglich beispielhaft ein Datenblock durch ein schraffiertes Rechteck wiedergegeben ist. Die Datenblocks enthalten mehrere zeitlich aufeinander folgende Abtastungen SP in Range-Richtung. Für jeden einzelnen Datenblock wird separat eine BAQ-Quantisierung durchgeführt, wie weiter unten noch erläutert wird. Die Bitrate (d.h. Anzahl von Bits pro quantisierter Datenabtastung) wird dabei variabel für jeden Datenblock in Abhängigkeit von Merkmalen festgelegt, die aus den Datenabtastungen des jeweiligen Datenblocks extrahiert werden. Üblicherweise wird die Zuweisung der einzelnen Datenblocks zu einer entsprechenden Bitrate der Quantisierung explizit durch eine Vorschrift bzw. eine Regel implementiert, z.B. in der Form von Look-up-Tabellen, die im Satelliten SA hinterlegt sein können und gegebenenfalls auch eine A-Priori-Informationen enthalten, wie z.B. die lokale Verteilung von Rückstreusignalen für den gerade erfassten Abschnitt auf der Erdoberfläche. Demzufolge ist es erforderlich, dass eine große Datenmenge an den Satelliten SA hochgeladen werden muss, wofür ausreichend Bandbreite sowie ausreichend Speicherplatz auf dem Satelliten benötigt wird.

Im Rahmen der Erfindung wird die entsprechende Vorschrift bzw. Regel nunmehr nicht mehr explizit, sondern über ein gelerntes datengetriebenes Modell implementiert, das in der Ausführungsform der Fig. 2 ein neuronales Netz NN ist. Dabei sind in dem neuronalen Netz NN mehrere unterschiedliche Vorschriften implementiert, wobei ausgewählt werden kann, mit welcher Vorschrift die entsprechende Quantisierung durchgeführt werden soll. Das neuronale Netz NN wurde vorab durch ein entsprechendes Training erzeugt, wobei dieses Training weiter unten erläutert wird und auch einen Bestandteil der Erfindung darstellt. Im Rahmen des Trainings des neuronalen Netzes NN wurde eine Kostenfunktion L (englisch: loss function) verwendet, die ebenfalls weiter unten erläutert wird. Ziel des Trainings des neuronalen Netzes ist die Minimierung der Kostenfunktion. Im Unterschied zum Stand der Technik enthält die Kostenfunktion ein erstes Teilziel und ein zweites Teilziel. Das erste Teilziel betrifft eine gute Übereinstimmung der Ausgabe des neuronalen Netzes NN mit den entsprechenden Trainingsdaten. Das zweite Teilziel ist eine Anforderung an die jeweiligen Bitraten, die zur Quantisierung verwendet werden. Dabei sollen die Bitraten möglichst nahe an einem vorgegebenen Bitratenwert liegen, so dass über die Kostenfunktion auch die mittlere Bitrate der Quantisierung gesteuert werden kann.

Als neuronales Netz kann eine beliebige, an sich bekannte Netzstruktur aus einer Eingangsschicht, einer Vielzahl von dazwischen liegenden versteckten Schichten und einer Ausgangsschicht verwendet werden. Es hat sich jedoch gezeigt, dass ein sog. Convolutional Neural Network für die Verarbeitung von SAR-Rohdaten besonders geeignet ist. Solche Netze verwenden sog. Convolutional Layers, die die zugeführten Daten zunächst einer Faltung mit einem Filterkernel unterziehen.

Über die Eingangsschicht wird dem neuronalen Netz NN der zu quantisierende Rohdatensatz RD zugeführt, aus dem das neuronale Netz mittels seiner versteckten Schichten einen Bitraten-Vektor Ŷ an seiner Ausgangsschicht berechnet. Der Bitraten-Vektor umfasst mehrere Bitraten-Einträge B1, B2, ..., Bm, die jeweils eine Bitraten-Information ŷ₁, ŷ₂,..., ŷₘ in der Form einer Bitratenkarte repräsentieren. Die jeweilige Bitratenkarte gibt für jeden Datenblock des Rohdatensatzes RD eine entsprechende Bitrate für die Quantisierung dieses Datenblocks an. In Fig. 2 sind schematisch lediglich die Bitratenkarte für die Biteinträge B1, B2 und Bm dargestellt, wobei beispielhaft nur einige Einträge der Karte durch schraffierte Quadrate angedeutet sind. Jeder Eintrag der Karte repräsentiert eine entsprechende Bitrate BR. Die Position jedes Eintrags der Karte ist in an sich bekannter Weise mit einer Position eines Datenblocks in den Rohdaten RD verknüpft.

Zu jedem der Bitraten-Einträge Br gehört ein entsprechender Merkmalssatz FSr (r = 1, ..., m). Jedem Merkmalssatz FSr sind vier Größen in der Form eines ersten Gewichts αᵣ, eines zweiten Gewicht βᵣ, einer entsprechender Vorschrift bzw. Regel RUᵣ und eines vorgegebenen Bitratenwerts Rᵣ zugeordnet, wobei sich die Merkmalssätze in wenigstens einer dieser Größen unterscheiden. Unterschiedliche Merkmalssätze können jedoch für einen Teil dieser Größen miteinander übereinstimmen. Beispielsweise kann die entsprechende Vorschrift RUᵣ für einen Teil der Merkmalssätze und ggf. auch für alle Merkmalssätze identisch sein, sofern sich die Merkmalssätze in einer anderen Größe unterscheiden. Unter anderem sind die ersten Gewichte αᵣ und die zweiten Gewichte βᵣ in der Kostenfunktion L enthalten, wie weiter unten näher beschrieben wird. Das erste Gewicht αᵣ gewichtet das erste Teilziel der Kostenfunktion L und das zweite Gewicht βᵣ gewichtet das zweite Teilziel der Kostenfunktion L.

Für die anschließende Quantisierung Q des entsprechenden Rohdatensatzes RD wird einer der Bitraten-Einträge B 1 bis Bm vorab festgelegt bzw. durch einen Benutzer ausgewählt. In dem Szenario der Fig. 2 wird zur Quantisierung der Bitraten-Eintrag B1 genutzt, wie durch einen gestrichelten Pfeil angedeutet ist.

Basierend auf der Bitraten-Information bzw. Bitratenkarte ŷ₁ des Bitraten-Eintrags B1 erfolgt dann die Quantisierung Q des Rohdatensatzes RD. Im Rahmen dieser Quantisierung wird jeder Datenblock DB des Rohdatendatensatzes RD separat mit der entsprechend zugeordneten Bitrate BR aus der Bitratenkarte ŷ₁ des Bitraten-Eintrags B1 quantisiert. Für die Quantisierung der einzelnen Datenblocks kann eine beliebige, an sich bekannte BAQ-Quantisierung genutzt werden, wie z.B. die BAQ-Quantisierung aus dem Dokument [1] oder [2].

Nach der Durchführung der Quantisierung Q wird schließlich der quantisierte Rohdatensatz QRD erhalten, in dem die einzelnen Datenabtastungen quantisiert und somit komprimiert sind. Beispielhaft sind in Fig. 2 einige der quantisierten Datenabtastungen durch schraffierte Quadrate dargestellt und mit Bezugszeichen QSP bezeichnet.

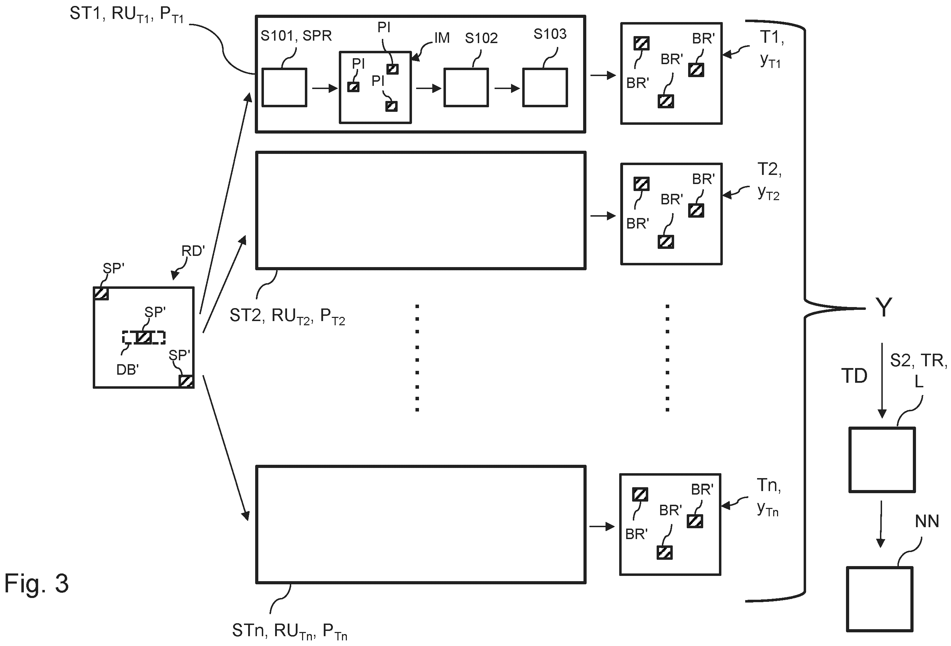

Nachfolgend wird anhand von Fig. 3 das Training des neuronalen Netzes NN aus Fig. 2 erläutert, wobei das Training in der Regel getrennt von der Quantisierung vorab am Boden einmalig durchgeführt wird und anschließend lediglich das trainierte neuronale Netz auf den Satelliten zur Verwendung für die Quantisierung hochgeladen wird.

Gemäß Fig. 3 umfasst das Verfahren zur Erzeugung des trainierten neuronalen Netzes NN zunächst die Generierung geeigneter Trainingsdaten TD in der Form entsprechender Trainingsvektoren Y, die jeweils Trainings-Einträge T1 bis Tn enthalten. Anschließend wird das eigentliche Training bzw. Lernen des neuronalen Netzes durchgeführt (Schritt S4). Zur Erzeugung entsprechender Trainingsdaten wird eine Vielzahl von vorbekannten Rohdatensätzen RD' verarbeitet, die analog zu dem Rohdatensatz RD der Fig. 2 aufgebaut sind. Das heißt, ein entsprechender vorbekannter Rohdatensatz RD' enthält eine Vielzahl von Datenakquisitionen SP' und ist analog zu der Struktur des Rohdatensatzes RD in Datenblocks (BAQ-Blocks) DB' aufgeteilt. Die Kombination aus einem Rohdatensatz RD' und einem Trainings-Vektor Y für diesen Rohdatensatz stellt dabei einen Trainingsdatensatz dar. Die Trainingsdaten TD setzen sich somit aus einer Vielzahl von Trainingsdatensätzen entsprechend der Anzahl von vorbekannten Rohdatensätzen zusammen.

Für jeden der vorbekannten Rohdatensätze RD' werden für jede der Vorschriften RU_{T1} bis RU_{Tn}, die in den Merkmalssätzen FS1 bis FSm enthalten sind, Trainings-Einträge T1 bis Tn mit jeweiligen Bitraten-Informationen y_{T1} bis y_{Tn} in entsprechenden Schritten ST1 bis STn generiert, wobei nur die Schritte ST1, ST2 und STn dargestellt sind. Die einzelnen Bitraten-Informationen der Trainings-Einträge T1 bis Tn sind wiederum Bitratenkarten, die analog zu den Bitratenkarten der Fig. 2 aufgebaut sind und somit für die einzelnen Datenblocks DB' eines jeweiligen Rohdatensatzes RD' zugeordnete Bitraten BR' festlegen. In dem Szenario der Fig. 3 werden in den Schritten ST1 bis STn insgesamt n Trainings-Einträge T1 bis Tn unter Verwendung entsprechender Vorschriften RU_{T1} bis RU_{Tn} generiert, wobei eine jeweilige Vorschrift von Werten zumindest eines Parameters P_{Ti} (i = 1, ..., n) abhängt, die aus dem jeweiligen vorbekannten Rohdatensatz gewonnen werden. Beispiele entsprechender Vorschriften wurden im Vorangegangenen erläutert und sind auch in den beigefügten Ansprüchen definiert.

Zur Verdeutlichung ist in Fig. 3 beispielhaft für den Schritt ST1 die Erzeugung des Trainings-Eintrags T1 basierend auf der Vorschrift bzw. Regel gezeigt, die in der Druckschrift [4] beschrieben ist und von Parameterwerten in der Form von Werten der Standardabweichung der Verteilung der rückgestreuten Signale in einem Ausschnitt um jeweilige Bildpunkte eines SAR-Bilds abhängt, das aus einem entsprechenden digitalen Rohdatensatz ohne Quantisierung ermittelt wird. Dabei wird in dem Teilschritt S101 zunächst eine an sich bekannte SAR-Prozessierung SPR durchgeführt, bei welcher der Rohdatensatz RD' einer an sich bekannten Azimut- und Range-Fokussierung unterzogen wird, woraus ein komplexes zweidimensionales SAR-Bild IM gewonnen wird, das eine Vielzahl von Bildpunkten PI enthält, die lediglich beispielhaft durch einige schraffierte Quadrate angedeutet sind. Jeder Bildpunkt entspricht einem kleinen Ausschnitt auf der Erdoberfläche mit einer entsprechenden Amplitude und einer entsprechenden Phase. Ein jeweiliger Bildpunkt kann mit einer an sich bekannten Methodik räumlich mit einem Datenblock DB' in den Rohdaten RD' verknüpft werden.

In einem Teilschritt S102 werden aus dem gewonnenen SAR-Bild IM Werte des Parameters P_{T1} extrahiert, der die Standardabweichung der Verteilung des rückgestreuten Signals in einem Ausschnitt um einen Bildpunkt des SAR-Bilds IM ist, wobei Werte dieses Parameters für alle Bildpunkte im SAR-Bild bestimmt werden. In Abhängigkeit von diesen Parameterwerten wird dann in Teilschritt S103 mittels der Regel RU_{T1}, die aus der Druckschrift [4] stammt, die Bitraten-Information y_{T1} bestimmt. Mit anderen Worten gibt die Regel für einen entsprechenden Parameterwert eines Bildpunkts PI und somit für einen verknüpften Datenblock DB' die für diesen Datenblock zu verwendende Bitrate BR' an.

Anstatt oder zusätzlich zu der in der Druckschrift [4] beschriebenen Regel bzw. Vorschrift können in den jeweiligen Schritten ST1 bis STn auch beliebige andere Vorschriften genutzt werden, die von anderen oder weiteren Parameterwerten des SAR-Bilds oder gegebenenfalls auch von Parameterwerten abhängen, die sich aus einer weitergehenden SAR-Prozessierung ergeben. Beispiele von solchen Parameterwerten (Signal-zu-Quantisierungsrauschen-Verhältnis, Kohärenzverlust, Standardabweichung der Verteilung des durch die Quantisierung verursachten Phasenfehlers) wurden weiter oben beschrieben. In einer abgewandelten Ausführungsform ist es auch möglich, dass eine entsprechende Regel Parameter verwendet, die direkt aus den Datenabtastungen eines jeweiligen Datenblocks ohne Zwischenschaltung einer SAR-Prozessierung SPR abgeleitet werden. Eine solche Regel ist beispielweise in der oben erwähnten Druckschrift [3] beschrieben.

Als Ergebnis der jeweiligen Schritt ST1 bis STn erhält man schließlich für jeden Rohdatensatz RD' einen Trainingsdatensatz aus einem Rohdatensatz RD' und einem Trainings-Vektor Y mit Trainings-Einträgern T1 bis Tn. Die Gesamtheit der Trainingsdatensätze repräsentiert gemäß Fig. 3 die Trainingsdaten TD. Anschließend werden diese Trainingsdaten dazu genutzt, um im Rahmen eines überwachten Lernens in Schritt S2 der Fig. 3 ein Training TR des entsprechenden, zunächst untrainierten neuronalen Netzes unter Verwendung einer Kostenfunktion L durchzuführen. Als Ergebnis erhält man das trainierte neuronale Netz NN, das dann auf den Satelliten hochgeladen wird und dort zur Quantisierung gemäß dem Verfahren der Fig. 2 genutzt wird.

Ein wesentlicher Aspekt der hier beschriebenen Ausführungsform besteht darin, dass zum Lernen des neuronalen Netzes NN eine spezielle Kostenfunktion verwendet wird, die ein Optimierungsziel basierend auf einem ersten Teilziel, das mit einem ersten Gewicht gewichtet ist, und einem zweiten Teilziel, das mit einem zweiten Gewicht gewichtet ist, modelliert. Das Optimierungsziel ist die Minimierung der Kostenfunktion, die basierend auf den oben definierten Variablen aus Fig. 2 und Fig. 3 wie folgt lautet: $L = \left[\begin{matrix}{α}_{1} \\ ⋮ \\ {α}_{m}\end{matrix}\right] ⋅ \left[\begin{matrix}{\left({y}_{1}-{\hat{y}}_{1}\right)}^{2} \\ ⋮ \\ {\left({y}_{m}-{\hat{y}}_{m}\right)}^{2}\end{matrix}\right] + \left[\begin{matrix}{β}_{1} \\ ⋮ \\ {β}_{m}\end{matrix}\right] ⋅ \left[\begin{matrix}{\left({R}_{1}-{\hat{y}}_{1}\right)}^{2} \\ ⋮ \\ {\left({R}_{m}-{\hat{y}}_{m}\right)}^{2}\end{matrix}\right]$ wobei $\left[\begin{matrix}{β}_{1} \\ ⋮ \\ {β}_{m}\end{matrix}\right] = \left(\left[\begin{matrix}1 \\ ⋮ \\ 1\end{matrix}\right]-\left[\begin{matrix}{α}_{1} \\ ⋮ \\ {α}_{m}\end{matrix}\right]\right)$
wobei L die Kostenfunktion in der Form eines m-dimensionalen Vektors ist;
wobei m die Anzahl von Funktionseinträgen (Einträge des m-dimensionalen Vektors) ist, wobei jeder Funktionseintrag mit einem der Merkmalssätze FS1 bis FSm korreliert ist;
wobei αᵣ (r = 1, ..., m) das erste Gewicht für den mit dem jeweiligen Funktionseintrag korrelierten Merkmalssatz FSr ist;
wobei yᵣ (r = 1, ..., m) die Bitraten-Information des Trainings-Eintrags ist, zu dem die Vorschrift des mit dem jeweiligen Funktionseintrag korrelierten Merkmalssatzes FSr gehört und der in dem Trainings-Vektor für den jeweiligen Rohdatensatz RD' enthalten ist;
wobei ŷᵣ (r = 1, ..., M) die Bitraten-Information des Bitraten-Eintrags Br ist, dem der mit dem jeweiligen Funktionseintrag korrelierte Merkmalssatz FSr zugeordnet ist und der in dem Bitraten-Vektor Ŷ enthalten ist, den das neuronale Netz (NN) an dessen Ausgang für den jeweiligen Rohdatensatz RD' an dessen Eingang ausgibt; wobei βᵣ (r = 1, ..., M) das zweite Gewicht für den mit dem jeweiligen Funktionseintrag korrelierten Merkmalssatz FSr ist;
wobei Rᵣ (r = 1, ..., M) ein vorgegebener Bitratenwert für den mit dem jeweiligen Funktionseintrag korrelierten Merkmalssatz FSr ist, wobei der vorgegebene Bitratenwert identisch für alle Bitraten der Bitraten-Information ŷᵣ des Bitraten-Eintrags Br ist, zu dem der mit dem jeweiligen Funktionseintrag korrelierte Merkmalssatz FSr gehört und der in dem Bitraten-Vektor Ŷ enthalten ist, den das neuronale Netz NN an dessen Ausgang für den jeweiligen vorbekannten Rohdatensatz RD' an dessen Eingang ausgibt.

Um im Rahmen des Lernen des neuronalen Netzes NN das (globale) Minimum der obigen Kostenfunktion L aufzufinden, können an sich bekannte numerische Verfahren, wie z.B. das Gradientenabstiegsverfahren, verwendet werden.

Die im Vorangegangenen beschriebenen Ausführungsformen der Erfindung weisen eine Reihe von Vorteilen auf. Insbesondere wird erstmalig eine adaptive BAQ-Quantisierung, bei der Datenblocks der SAR-Rohdaten mit unterschiedlichen Bitraten quantisiert werden können, mit einem neuronalen Netz kombiniert, dass neben dem Ziel eines geringen Fehlers der vom neuronalen Netz ausgegeben Bitraten auch das Ziel des Erreichens eines vorgegebenen Bitratenwerts berücksichtigt. Mittels des vorgegebenen Bitratenwerts kann eine mittlere Bitrate der quantisierten Datenblocks entsprechend den Anforderungen an die Datenübertragung der quantisierten Rohdaten gewährleistet werden. Über ein erstes und zweites Gewicht können die obigen Ziele geeignet gewichtet werden. Ferner kann das neuronale Netz Bitraten für mehrere mögliche Quantisierungen entsprechend den oben beschriebenen Merkmalssätzen ausgeben, so dass eine für die aktuellen Gegebenheiten geeignete Quantisierung ausgewählt werden kann. Es ist hierbei nicht mehr erforderlich, vorab große Datenmengen in der Form von Look-up-Tabellen bzw. anderen A-Priori-Informationen im entsprechenden Quantisierer zu hinterlegen. Es muss lediglich das gelernte neuronale Netz im Quantisierer gespeichert werden. Dabei kann das neuronale Netz sehr recheneffizient mittels an sich bekannter FPGAs (FPGA = Field Programmable Gate Array) implementiert werden.

### Literaturverzeichnis:

[1] El Boustani, A.; Brunham, K.; Kinsner, W.: "A Review of Current Raw SAR Data Compression Techniques", Electrical and Computer Engineering, Canadian Conference on, 2001, Vol. 2, Seiten 925 - 930
[2] US 6,255,987 B1
[3] E. Attema, C. Cafforio, M. Gottwald, P. Guccione, A. M. Guarnieri, F. Rocca, P. Snoeij: "Flexible Dynamic Block Adaptive Quantization for Sentinel-1 SAR Missions", IEEE Geoscience and Remote Sensing Letters, Vol. 7, Nr. 4, Seiten 766-770, October 2010
[4] M. Martone, N. Gollin, P. Rizzoli, G. Krieger: "Performance-Optimized Quantization for SAR and InSAR Applications", IEEE Transactions on Geoscience and Remote Sensing, Vol. 60, Seiten 1-22, 2022
[5] EP 4 340 227 A1
[6] DE 10 2012 209 113 B4

## Patentansprüche

1. Verfahren zur rechnergestützten Erzeugung eines datengetriebenen Modells für die rechnergestützte Verarbeitung von digitalen SAR-Rohdaten, welche die rückgestreuten Radarechos von Radarpulsen (RP) umfassen, wobei die Radarpulse (RP) von einem oder mehreren Sendern zumindest eines Objekts (SA) ausgesendet wurden, das sich in einer ersten Richtung (x) bewegt, und die Radarechos von einem oder mehreren Empfängern des zumindest einen Objekts (SA) empfangen wurden, wobei die SAR-Rohdaten für jeden Empfänger einen Rohdatensatz (RD) aus einer Vielzahl von zeitlich aufeinander folgenden Datenabtastungen (SP) enthalten, denen jeweils eine Position in der ersten Richtung (x) und eine Position in einer zweiten Richtung (y) senkrecht zur ersten Richtung (x) zugeordnet sind, wobei im Rahmen der Verarbeitung der SAR-Rohdaten Datenblocks (DB) von zeitlich aufeinander folgenden Datenabtastungen (SP) des Rohdatensatzes (RD) separat mit einer dem jeweiligen Datenblock (DB) zugeordneten Bitrate (BR), welche die Anzahl von Bits pro quantisierter Datenabtastung (QSP) im jeweiligen Datenblock (DB) festlegt, unter Verwendung einer Bitraten-Information (ŷ₁, ..., ŷₘ) quantisiert werden, wobei die Bitraten-Information (ŷ₁, ..., ŷₘ) für jeden Datenblock (DB) die zugeordnete Bitrate (BR) angibt und das datengetriebene Modell zur Ermittlung der Bitraten-Information (ŷ₁, ..., ŷₘ) vorgesehen ist, wobei die Erzeugung des datengetriebenen Modells folgende Schritte umfasst:
- Generierung von Trainingsdaten (TD), indem für eine Vielzahl von unterschiedlichen vorbekannten Rohdatensätzen (RD') jeweils ein Trainings-Vektor (Y) mit einem oder mehreren Trainings-Einträgen (T1, ..., Tn) erzeugt wird, wobei jeder Trainings-Eintrag (T1, ..., Tn) eine Bitraten-Information (y_{T1}, ..., y_{Tn}) enthält, welche Bitraten (BR') für Datenblocks (DB') eines jeweiligen vorbekannten Rohdatensatzes (RD') angibt, wobei die Bitraten-Information (y_{T1}, ..., y_{Tn}) basierend auf einer dem jeweiligen Trainings-Eintrag (T1, ..., Tn) zugewiesenen Vorschrift (RU_{T1}, ..., RU_{Tn}) aus einer Anzahl von Vorschriften (RU_{T1}, ..., RU_{Tn}) generiert wird, wobei die zugewiesene Vorschrift (RU_{T1}, ..., RU_{Tn}) mit zumindest einem Parameter (P_{T1}, ..., P_{Tn}) verknüpft ist und von Werten des zumindest einen Parameters (P_{T1}, ..., P_{Tn}) abhängt, die aus zumindest dem jeweiligen vorbekannten Rohdatensatz (RD') gewonnen werden;
- Trainieren eines neuronalen Netzes (NN) mit den Trainingsdaten (TD), wodurch das erzeugte datengetriebene Modell erhalten wird, wobei das neuronale Netz (NN) einen Eingang zur Eingabe eines Rohdatensatzes (RD) und einen Ausgang zur Ausgabe eines Bitraten-Vektors (Ŷ) für den eingegebenen Rohdatensatz (RD) enthält, wobei der Bitraten-Vektor (Ŷ) einen oder mehrere Bitraten-Einträge (B1, ..., Bm) umfasst, wobei jeder Bitraten-Eintrag (B1, ..., Bm) eine Bitraten-Information (ŷ₁, ..., ŷₘ) enthält, welche Bitraten (BR) für Datenblocks (DB) des eingegebenen Rohdatensatzes (RD) angibt, wobei jedem Bitraten-Eintrag (B1, ..., Bm) ein Merkmalssatz (FS1, ..., FSm) aus einer Anzahl von Merkmalssätzen (FS1, ..., FSm) zugeordnet ist, wobei zu jedem Merkmalssatz (FS1, ..., FSm) der Anzahl von Merkmalssätzen (FS1, ..., FSm) ein erstes Gewicht (α₁,..., αₘ), ein zweites Gewicht (β₁, ..., βₘ), eine Vorschrift (RU_{T1}, ..., RU_{Tn}) aus der Anzahl von Vorschriften (RU_{T1}, ..., RU_{Tn}) und ein Bitratenkriterium in der Form eines vorgegebenen Bitratenwerts (R₁, ..., Rₘ) oder eines vorgegebenen Bitratenintervalls gehört;
- wobei das Trainieren des neuronalen Netzes (NN) mittels der Trainingsdaten (TD) basierend auf einem überwachten Lernen mit einem Optimierungsziel erfolgt, das für jeden Merkmalssatz (FS1, ..., FSm) ein erstes Teilziel und ein zweites Teilziel umfasst, wobei das erste Teilziel mit dem ersten Gewicht (α₁,..., αₘ) des jeweiligen Merkmalssatzes und das zweite Teilziel mit dem zweiten Gewicht (β₁, ..., βₘ), des jeweiligen Merkmalssatzes (FS1, ..., FSm) gewichtet ist, wobei
i) gemäß dem ersten Teilziel für die jeweiligen vorbekannten Rohdatensätze (RD'), die in das neuronale Netz (NN) eingegeben werden, die ausgegebene Bitraten-Information (ŷ₁, ..., ŷₘ) des Bitraten-Eintrags (B1, ..., Bm), dem der jeweilige Merkmalssatz (FS1, ..., FSm) in dem ausgegebenen Bitraten-Vektor (Ŷ) zugeordnet ist, möglichst wenig von der Bitraten-Information (y_{T1}, ..., y_{Tn}) des Trainings-Eintrags (T1, ..., Tn) abweicht, dem die Vorschrift (RU_{T1}, ..., RU_{Tn}) des jeweiligen Merkmalssatzes (FS1, ..., FSm) in dem Trainings-Vektor (Y) für den jeweiligen vorbekannten Rohdatensatz (RD') zugewiesen ist;
ii) gemäß dem zweiten Teilziel für die jeweiligen vorbekannten Rohdatensätze (RD'), die in das neuronale Netz (NN) eingegeben werden, die jeweiligen Bitraten (BR) der ausgegebenen Bitraten-Information (ŷ₁, ..., ŷₘ) des Bitraten-Eintrags (B1, ..., Bm), dem der jeweilige Merkmalssatz (FS1, ..., FSm) in dem ausgegebenen Bitraten-Vektor (Y) zugeordnet ist, möglichst wenig von dem vorgegebenen Bitratenwert (R₁, ..., Rₘ) oder dem vorgegebenen Bitratenintervall des jeweiligen Merkmalssatzes (FS1, ..., FSm) abweichen.

2. Verfahren nach Anspruch 1, **dadurch gekennzeichnet, dass** das Optimierungsziel durch das Auffinden eines Extremums einer Kostenfunktion (L) repräsentiert wird, wobei die Kostenfunktion (L) ein Vektor aus einer Anzahl von Funktionseinträgen ist, wobei jeder Funktionseintrag mit einem Merkmalssatz (FS1, ..., FSm) der Anzahl von Merkmalssätzen (FS1, ..., FSm) korreliert ist und eine gewichtete Summe darstellt, die einen mit dem ersten Gewicht (α₁,..., αₘ) gewichteten ersten Term zur Repräsentation des ersten Teilziels und einen mit dem zweiten Gewicht (β₁, ..., βₘ) gewichteten zweiten Term zur Repräsentation des zweiten Teilziels umfasst,
- wobei in jedem Funktionseintrag der erste Term ein Differenzmaß ist, das für einen jeweiligen vorbekannten Rohdatensatz (RD') ein Maß ist für die Differenz zwischen der Bitraten-Information (y_{T1}, ..., y_{Tn}) des Trainings-Eintrags (T1, ..., Tn), dem die Vorschrift (RU_{T1}, ..., RU_{Tn}) des mit dem jeweiligen Funktionseintrag korrelierten Merkmalssatzes (FS1, ..., FSm) zugewiesen ist und der in dem Trainings-Vektor (Y) für den jeweiligen vorbekannten Rohdatensatz (RD') enthalten ist, und der Bitraten-Information (ŷ₁, ..., ŷₘ) des Bitraten-Eintrags (B1, ..., Bm), dem der mit dem jeweiligen Funktionseintrag korrelierte Merkmalssatz (FS1, ..., FSm) zugeordnet ist und der in dem Bitraten-Vektor (Ŷ) enthalten ist, den das neuronale Netz (NN) an dessen Ausgang für den jeweiligen vorbekannten Rohdatensatz (RD) an dessen Eingang ausgibt;
- in jedem Funktionseintrag der zweite Term ein Differenzmaß ist, das für einen jeweiligen vorbekannten Rohdatensatz (RD') ein Maß ist für die Differenz zwischen dem vorgegebenen Bitratenwert (R1, ...,Bm) oder dem vorgegebenen Bitratenintervall und den jeweiligen Bitraten (BR) der Bitraten-Information (ŷ₁, ..., ŷₘ) des Bitraten-Eintrags (B1, ..., Bm), dem der mit dem jeweiligen Funktionseintrag korrelierte Merkmalssatz (FS1, ..., FSm) zugeordnet ist und der in dem Bitraten-Vektor (Ŷ) enthalten ist, den das neuronale Netz (NN) an dessen Ausgang für den jeweiligen vorbekannten Rohdatensatz (RD') an dessen Eingang ausgibt.

3. Verfahren nach Anspruch 2, **dadurch gekennzeichnet, dass** das Optimierungsziel durch das Auffinden des Minimums der folgenden Kostenfunktion (L) repräsentiert wird: $L = \left[\begin{matrix}{α}_{1} \\ ⋮ \\ {α}_{m}\end{matrix}\right] ⋅ \left[\begin{matrix}{\left({y}_{1}-{\hat{y}}_{1}\right)}^{2} \\ ⋮ \\ {\left({y}_{m}-{\hat{y}}_{m}\right)}^{2}\end{matrix}\right] + \left[\begin{matrix}{β}_{1} \\ ⋮ \\ {β}_{m}\end{matrix}\right] ⋅ \left[\begin{matrix}{\left({R}_{1}-{\hat{y}}_{1}\right)}^{2} \\ ⋮ \\ {\left({R}_{m}-{\hat{y}}_{m}\right)}^{2}\end{matrix}\right]$ wobei $\left[\begin{matrix}{β}_{1} \\ ⋮ \\ {β}_{m}\end{matrix}\right] = \left(\left[\begin{matrix}1 \\ ⋮ \\ 1\end{matrix}\right]-\left[\begin{matrix}{α}_{1} \\ ⋮ \\ {α}_{m}\end{matrix}\right]\right)$
wobei L die Kostenfunktion (L) ist;
wobei m die Anzahl von Funktionseinträgen ist;
wobei αᵣ (r = 1, ..., m) das erste Gewicht (αᵣ) für den mit dem jeweiligen Funktionseintrag korrelierten Merkmalssatz ist;
wobei yᵣ (r = 1, ..., m) die Bitraten-Information (y_{T1}, ..., y_{Tn}) des Trainings-Eintrags (T1, ..., Tn) ist, dem die Vorschrift (RU_{T1}, ..., RU_{Tn}) des mit dem jeweiligen Funktionseintrag korrelierten Merkmalssatzes (FS1, ..., FSm) zugewiesen ist und der in dem Trainings-Vektor (Y) für den jeweiligen vorbekannten Rohdatensatz (RD') enthalten ist;
wobei ŷᵣ (r = 1, ..., M) die Bitraten-Information (ŷ₁, ..., ŷₘ) des Bitraten-Eintrags (B1, ..., Bm) ist, dem der mit dem jeweiligen Funktionseintrag korrelierte Merkmalssatz (FS1, ..., FSm) zugeordnet ist und der in dem Bitraten-Vektor (Ŷ) enthalten ist, den das neuronale Netz (NN) an dessen Ausgang für den jeweiligen vorbekannten Rohdatensatz (RD') an dessen Eingang ausgibt; wobei βᵣ (r = 1, ..., M) das zweite Gewicht für den mit dem jeweiligen Funktionseintrag korrelierten Merkmalssatz ist;
wobei Rᵣ (r = 1, ..., M) der vorgegebene Bitratenwert für den mit dem jeweiligen Funktionseintrag korrelierten Merkmalssatz (FS1, ..., FSm) ist, wobei der vorgegebene Bitratenwert identisch für alle Bitraten der Bitraten-Information (ŷᵣ) des Bitraten-Eintrags (B1, ..., Bm) ist, dem der mit dem jeweiligen Funktionseintrag korrelierte Merkmalssatz (FS1, ..., FSm) zugeordnet ist und der in dem Bitraten-Vektor (Ŷ) enthalten ist, den das neuronale Netz (NN) an dessen Ausgang für den jeweiligen vorbekannten Rohdatensatz (RD') an dessen Eingang ausgibt.

4. Verfahren nach einem der vorhergehenden Ansprüche, **dadurch gekennzeichnet, dass** im Rahmen der Generierung der Trainingsdaten (TD) für zumindest eine Vorschrift (RU_{T1}, ..., RU_{Tn}) der Anzahl von Vorschriften (RU_{T1}, ..., RU_{Tn}) eine SAR-Prozessierung (SPR) für einen jeweiligen vorbekannten Rohdatensatz (RD') durchgeführt wird, welche die Ermittlung von einem oder mehreren SAR-Bildern (IM) aus zumindest dem jeweiligen vorbekannten Rohdatensatz (RD') enthält, wobei aus Informationen, welche die SAR-Prozessierung (SPR) liefert, die Werte des zumindest einen Parameters (P_{T1}, ..., P_{Tn}), der mit der zumindest einen Vorschrift (RU_{T1}, ..., RU_{Tn}) verknüpft ist, gewonnen werden, wobei die Werte des zumindest einen Parameters (P_{T1}, ..., P_{Tn}) vorzugsweise Qualitätswerte für ein aus der SAR-Prozessierung gewonnenes SAR-Produkt sind.

5. Verfahren nach Anspruch 4, **dadurch gekennzeichnet, dass** der zumindest eine Parameter (P_{T1}, ..., P_{Tn}), der mit der zumindest einen Vorschrift (RU_{T1}, ..., RU_{Tn}) verknüpft ist, die Standardabweichung der Verteilung der rückgestreuten Signale in einem Ausschnitt um einen Bildpunkt (PI) eines SAR-Bilds (IM) umfasst, das für den jeweiligen vorbekannten Rohdatensatz (RD') ohne Quantisierung oder nach einer Quantisierung mit konstanter Bitrate ermittelt wird, wobei Werte der Standardabweichung für eine Vielzahl von Bildpunkten im SAR-Bild (IM) ermittelt werden.

6. Verfahren nach Anspruch 4 oder 5, **dadurch gekennzeichnet, dass** der zumindest eine Parameter (P_{T1}, ..., P_{Tn}), der mit der zumindest einen Vorschrift (RU_{T1}, ..., RU_{Tn}) verknüpft ist, das Signal-zu-Quantisierungsrauschen-Verhältnis in einem Ausschnitt um einen Bildpunkt (PI) eines SAR-Bilds (IM) umfasst, das für den jeweiligen vorbekannten Rohdatensatz (RD') nach einer Quantisierung mit konstanter Bitrate ermittelt wird, wobei Werte des Signal-zu-Quantisierungsrauschen-Verhältnisses für eine Vielzahl von Bildpunkten (PI) in mehreren, für den jeweiligen vorbekannten Rohdatensatz (RD') ermittelten SAR-Bildern (IM) ermittelt werden, wobei sich die mehreren SAR-Bilder (IM) in der Bitrate der Quantisierung des jeweiligen vorbekannten Rohdatensatzes (RD') unterscheiden.

7. Verfahren nach einem der Ansprüche 4 bis 6, **dadurch gekennzeichnet, dass** der zumindest eine Parameter (P_{T1}, ..., P_{Tn}), der mit der zumindest einen Vorschrift (RU_{T1}, ..., RU_{Tn}) verknüpft ist, den durch Quantisierung verursachten Kohärenzverlust in einem Ausschnitt um einen Bildpunkt eines SAR-Interferogramms umfasst, das aus dem jeweiligen vorbekannten Rohdatensatz (RD') und zumindest einem weiteren vorbekannten Rohdatensatz nach einer Quantisierung mit konstanter Bitrate ermittelt wird, wobei Werte des durch Quantisierung verursachten Kohärenzverlustes für eine Vielzahl von Bildpunkten für mehrere SAR-Interferogramme ermittelt werden, wobei sich die mehreren SAR-Interferogramme in der Bitrate der Quantisierung des jeweiligen vorbekannten Rohdatensatzes (RD') und des zumindest einen weiteren vorbekannten Rohdatensatzes unterscheiden.

8. Verfahren nach einem der Ansprüche 4 bis 7, **dadurch gekennzeichnet, dass** der zumindest eine Parameter (P_{T1}, ..., P_{Tn}), der mit der zumindest einen Vorschrift (RU_{T1}, ..., RU_{Tn}) verknüpft ist, die Standardabweichung der Verteilung des durch Quantisierung verursachten Phasenfehlers in einem Ausschnitt um einen Bildpunkt eines SAR-Interferogramms umfasst, das aus dem jeweiligen vorbekannten Rohdatensatz (RD') und zumindest einem weiteren vorbekannten Rohdatensatz nach einer Quantisierung mit konstanter Bitrate ermittelt wird, wobei Werte der Standardabweichung der Verteilung des durch Quantisierung verursachten Phasenfehlers für eine Vielzahl von Bildpunkten für mehrere SAR-Interferogramme ermittelt werden, wobei sich die mehreren SAR-Interferogramme in der Bitrate der Quantisierung des jeweiligen vorbekannten Rohdatensatzes (RD') und des zumindest einen weiteren vorbekannten Rohdatensatzes unterscheiden.

9. Verfahren nach einem der vorhergehenden Ansprüche, **dadurch gekennzeichnet, dass** für zumindest eine Vorschrift (RU_{T1}, ..., RU_{Tn}) der Anzahl von Vorschriften (RU_{T1}, ..., RU_{Tn}) die Werte des zumindest einen Parameters (P_{T1}, ..., P_{Tn}), der mit der zumindest einen Vorschrift (RU_{T1}, ..., RU_{Tn}) verknüpft ist, direkt aus den Datenabtastungen (SP') der Datenblocks (DB') des jeweiligen vorbekannten Rohdatensatz (RD') gewonnen werden, ohne dass für die Gewinnung des zumindest einen Parameters (P) eine SAR-Prozessierung (SPR) durchgeführt wird, welche die Ermittlung von SAR-Bildern (IM) aus zumindest dem jeweiligen vorbekannten Rohdatensatz enthält.

10. Verfahren nach Anspruch 9, **dadurch gekennzeichnet, dass** der zumindest eine Parameter (P_{T1}, ..., P_{Tn}), der mit der zumindest einen Vorschrift (RU_{T1}, ..., RU_{Tn}) verknüpft ist, das mittlere Signal-zu-Rausch-Verhältnis der Datenabtastungen (SP') in einem Datenblock (DB') in dem jeweiligen vorbekannten Rohdatensatz (RD') ist, wobei Werte des Signal-zu-Rausch-Verhältnisses für jeden Datenblock (DB') in dem jeweiligen vorbekannten Rohdatensatz (RD') ermittelt werden.

11. Verfahren nach einem der vorhergehenden Ansprüche, **dadurch gekennzeichnet, dass** das neuronale Netz (NN) ein Convolutional Neural Network ist.

12. Verfahren nach einem der vorhergehenden Ansprüche, **dadurch gekennzeichnet, dass** das neuronale Netz (NN) ein tiefes neuronales Netz ist.

13. Verfahren zur rechnergestützten Verarbeitung von digitalen SAR-Rohdaten, welche die rückgestreuten Radarechos von Radarpulsen (RP) umfassen, wobei die Radarpulse (RP) von einem oder mehreren Sendern zumindest eines Objekts (SA) ausgesendet wurden, das sich in einer ersten Richtung (x) bewegt, und die Radarechos von einem oder mehreren Empfängern des zumindest einen Objekts (SA) empfangen wurden, wobei die SAR-Rohdaten für jeden Empfänger einen Rohdatensatz (RD) aus einer Vielzahl von zeitlich aufeinander folgenden Datenabtastungen (SP) enthalten, denen jeweils eine Position in der ersten Richtung (x) und eine Position in einer zweiten Richtung (y) senkrecht zur ersten Richtung (x) zugeordnet sind, wobei im Rahmen der rechnergestützten Verarbeitung der SAR-Rohdaten Datenblocks (DB) von zeitlich aufeinander folgenden Datenabtastungen (SP) des Rohdatensatzes (RD) separat mit einer dem jeweiligen Datenblock (DB) zugeordneten Bitrate (BR), welche die Anzahl von Bits pro quantisierter Datenabtastung (QSP) im jeweiligen Datenblock (DB) festlegt, unter Verwendung einer Bitraten-Information (ŷ₁, ..., ŷₘ) quantisiert werden, wobei die Bitraten-Information f(ŷ₁, ..., ŷₘ) für jeden Datenblock (DB) die zugeordnete Bitrate (BR) angibt, wobei die Bitraten-Information (ŷ₁, ..., ŷₘ) einem Bitraten-Eintrag (B1, ..., Bm) entspricht, der mit einem datengetriebenen Modell generiert wird, das mit einem Verfahren nach einem der Ansprüche 1 bis 12 erzeugt wurde.

14. Verfahren nach Anspruch 13, **dadurch gekennzeichnet, dass** die quantisierten Datenabtastungen (QSP) auf dem zumindest einen Objekt (SA) ermittelt werden und anschließend an eine Bodenstation übertragen werden.

15. Vorrichtung zur rechnergestützten Verarbeitung von digitalen SAR-Rohdaten, welche die rückgestreuten Radarechos von Radarpulsen (RP) umfassen, wobei die Radarpulse (RP) von einem oder mehreren Sendern zumindest eines Objekts (SA) ausgesendet wurden, das sich in einer ersten Richtung (x) bewegt, und die Radarechos von einem oder mehreren Empfängern des zumindest einen Objekts (SA) empfangen wurden, wobei die SAR-Rohdaten für jeden Empfänger einen Rohdatensatz (RD) aus einer Vielzahl von zeitlich aufeinander folgenden Datenabtastungen (SP) enthalten, denen jeweils eine Position in der ersten Richtung (x) und eine Position in einer zweiten Richtung (y) senkrecht zur ersten Richtung (x) zugeordnet sind, wobei die Vorrichtung einen Quantisierer umfasst, der dazu eingerichtet ist, im Rahmen der rechnergestützten Verarbeitung der SAR-Rohdaten Datenblocks (DB) von zeitlich aufeinander folgenden Datenabtastungen (SP) des Rohdatensatzes (RD) separat mit einer dem jeweiligen Datenblock (DB) zugeordneten Bitrate (BR), welche die Anzahl von Bits pro quantisierter Datenabtastung (QSP) im jeweiligen Datenblock (DB) festlegt, unter Verwendung einer Bitraten-Information (ŷ₁, ..., ŷₘ) zu quantisieren, wobei die Bitraten-Information (ŷ₁, ..., ŷₘ) für jeden Datenblock (DB) die zugeordnete Bitrate (BR) angibt, wobei der Quantisierer zur Generierung der Bitraten-Information (ŷ₁, ..., ŷₘ) ein datengetriebenes Modell enthält, das mit einem Verfahren nach einem der Ansprüche 1 bis 12 erzeugt wurde.

16. Computerprogrammprodukt mit einem auf einem maschinenlesbaren Träger gespeicherten Programmcode zur Durchführung eines Verfahrens nach einem der Ansprüche 1 bis 14, wenn der Programmcode auf einem Rechner ausgeführt wird.

17. Computerprogramm mit einem Programmcode zur Durchführung eines Verfahrens nach einem der Ansprüche 1 bis 14, wenn der Programmcode auf einem Computer ausgeführt wird.
